(19) **Europäisches Patentamt**
**European Patent Office**
**Office européen des brevets**

(11) **EP 3 455 019 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **17715499.4**

(22) Anmeldetag: **10.04.2017**

(51) Internationale Patentklassifikation (IPC):
**B23F 23/12** *(2006.01)* **B23F 23/04** *(2006.01)*
**B23Q 17/20** *(2006.01)* **B23Q 3/18** *(2006.01)*
**G01M 13/02** *(2019.01)* **G05B 19/18** *(2006.01)*

(52) Gemeinsame Patentklassifikation (CPC):
**B23F 23/1218; B23F 23/04; B23F 23/1293;**
**G01M 13/021**

(86) Internationale Anmeldenummer:
**PCT/EP2017/058515**

(87) Internationale Veröffentlichungsnummer:
**WO 2017/194251 (16.11.2017 Gazette 2017/46)**

(54) **ZAHNRADBEARBEITUNGSMASCHINE MIT EINZENTRIERVORRICHTUNG**

GEAR MACHINING DEVICE WITH CENTERING DEVICE

MACHINE D'USINAGE D'ENGRENAGES COMPRENANT UN DISPOSITIF DE CENTRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016 CH 6012016**

(43) Veröffentlichungstag der Anmeldung:
**20.03.2019 Patentblatt 2019/12**

(73) Patentinhaber: **Reishauer AG**
**8304 Wallisellen (CH)**

(72) Erfinder:
• **SENNHAUSER, Erwin**
**8451 Kleinandelfingen (CH)**

• **FÜRDERER, Roman**
**8575 Istighofen (CH)**

(74) Vertreter: **Detken, Andreas**
**Isler & Pedrazzini AG**
**Giesshübelstrasse 45**
**Postfach 1772**
**8027 Zürich (CH)**

(56) Entgegenhaltungen:
**EP-A1- 0 330 901 EP-A2- 2 221 690**
**EP-A2- 2 570 220 EP-B1- 0 524 943**
**WO-A1-00/35621 DE-A1-102009 059 331**
**DE-C1- 3 615 365**

**Beschreibung**

TECHNISCHES GEBIET

Die vorliegende Erfindung betrifft eine Maschine zur Bearbeitung vorverzahnter Werkstücke, insbesondere von Zahnrädern, mit einer Einzentriervorrichtung für die Werkstücke. Eine derartige Maschine gemäß dem Oberbegriff des unabhängigen Anspruchs 1 ist aus dem Dokument WO 00/35621 A1 bekannt.

STAND DER TECHNIK

Bei der Feinbearbeitung von vorbearbeiteten Zahnrädern müssen vor Beginn jeder Bearbeitung das Werkzeug und das zu bearbeitende Zahnrad derart zueinander angeordnet werden, dass das Werkzeug kollisionsfrei in die Zahnlücke des Zahnrads eintauchen kann. Diese Prozedur ist in der Fachwelt als "Einzentrieren" bekannt.

Eine Einzentrieroperation ist insbesondere bei kontinuierlich arbeitenden Wälzbearbeitungsverfahren erforderlich. Bei solchen Verfahren wird das zu bearbeitende Zahnrad mit einem schraubenförmigen Werkzeug in Eingriff gebracht und in Wälzkopplung mit dem Werkzeug bearbeitet. Bei modernen, NC-gesteuerten Maschinen wird dazu das zu bearbeitende Zahnrad (Werkstück) auf einer NC-gesteuerten, drehangetriebenen Werkstückspindel aufgespannt. Das Werkzeug wird auf einer ebenfalls NC-gesteuerten, drehangetriebenen Werkzeugspindel aufgespannt. Die Wälzkopplung zwischen Werkzeugspindel und Werkstückspindel wird dann elektronisch durch die NC-Steuerung hergestellt.

Bei derartigen Wälzbearbeitungsverfahren muss die Zahnlücke am Werkstück relativ zu den Gewindegängen des schraubenförmigen Werkzeugs positioniert werden. Durch das Einzentrieren wird der Wälzkopplungswinkel zwischen dem Zahnrad und dem schraubenförmigen Werkzeug festgelegt.

Historisch erfolgte lange Zeit das Einzentrieren von Hand und bei stillstehendem Werkstück und Werkzeug. Der Wälzkopplungswinkel wurde hier rein mechanisch festgelegt. Diese Prozedur war allerdings sehr zeitaufwändig und fehleranfällig und führte zu hohen unproduktiven Nebenzeiten.

In der Folge gab es einerseits verschiedene Ansätze, das Einzentrieren zu automatisieren. Andererseits wurden Verfahren entwickelt, die das Einzentrieren ermöglichen, ohne dass dazu notwendigerweise die Werkzeugspindel angehalten werden muss. Heutzutage kommen zum Einzentrieren üblicherweise berührungslose Sonden zum Einsatz, die auf induktiver oder kapazitiver Basis arbeiten und die Zahnflanken vermessen, während sich das Werkstück dreht. Der Wälzkopplungswinkel wird aufgrund einer solchen berührungslosen Messung elektronisch festgelegt.

Ein solches Verfahren ist z.B. aus der DE 36 15 365 C1 bekannt. Bei diesem Verfahren wird das zu bearbeitende Zahnrad in Drehung versetzt, und es wird die Phasenlage von Signalen bestimmt, die entstehen, wenn die Zähne des Zahnrads an einer feststehenden Sonde vorbeistreichen. Diese Phasenlage wird mit der Phasenlage verglichen, die in einer Referenzmessung mit einem Zahnrad bekannter Orientierung ermittelt wurde. Entsprechend der Differenz dieser Phasenlagen wird der Wälzkopplungswinkel zwischen Werkstück und Werkzeug eingestellt.

Bei berührungslos arbeitenden Einzentriersonden stellt sich einerseits die Aufgabe, die Einzentriersonde in unmittelbarer Nähe der Aussenkontur des Werkstücks zu positionieren. Andererseits müssen beim Werkstückwechsel Kollisionen der Einzentriersonde mit einer Werkstückbeschickungsvorrichtung vermieden werden.

In der US 6,577,917 B1 wird vorgeschlagen, die Einzentriersonde auf einem Sondenhalter anzubringen. Der Sondenhalter ist mittels einer NC-gesteuerten Spindel parallel zur Werkstückspindelachse verfahrbar. Um die Einzentriersonde beim Werkstückwechsel aus dem Werkstückbereich heraus bewegen zu können, ist der Sondenhalter ausserdem pneumatisch oder motorisch um die Achse der ihm zugeordneten Spindel schwenkbar. Die eigentliche Einzentriersonde ist auf einem Adapter gehalten, der über ein senkrecht zur Werkstückspindelachse verlaufendes Sondenrohr mit dem Sondenhalter verbunden ist. Um die Lage der Einzentriersonde an unterschiedliche Werkstückdurchmesser anzupassen, wird das Sondenrohr manuell entlang seiner Längsrichtung gegenüber dem Sondenhalter verschoben.

In der US 7,013,744 B2 wird die Einzentriersonde auf einem Sondenhalter angeordnet, der ein Glied einer doppelt ausgebildeten Parallelogrammführung bildet. Die Parallelogrammführung weist ein dem Sondenhalter gegenüberliegendes Basisglied auf, das starr mit dem Maschinenbett oder einem Werkstückspindelgehäuse verbunden ist. Dadurch lässt sich die Einzentriersonde bei Bedarf aus dem Werkstückbereich ausschwenken. Der Schwenkantrieb ist unmittelbar neben dem Basisglied am Maschinenbett angeordnet. Die Einzentriersonde ist als zylindrischer Stab ausgebildet. Sie ist entlang ihrer eigenen Längsachse verschieb- und klemmbar in einer Haltesäule angeordnet. Die Haltesäule ist ihrerseits rechtwinklig zur Längsachse der Sonde verschieb- und klemmbar im Sondenhalter angeordnet. Um die Position der Einzentriersonde an unterschiedliche Werkstückdurchmesser anzupassen, wird die Einzentriersonde entlang ihrer Längsachse in der Haltesäule verschoben und geklemmt. Um die Position entlang der Werkstückachse einzustellen, wird die Haltesäule im Sondenhalter verschoben und geklemmt. Die Verstellung der Einzentriersonde erfolgt also stets relativ zur Halterung und rein manuell.

In der WO 00/35621 A1 wird eine Vorrichtung zur Bearbeitung von vorverzahnten Werkstücken offenbart, bei der zwei Werkstückspindeln auf einem gemeinsamen Werkstückträger in Form eines Drehtellers angeordnet sind. Auf einer der Werkstückspindeln erfolgt die Werkstückbearbeitung, während auf der zweiten Werkstückspindel der Werkstückwechsel und das Einzentrieren erfolgen. Das Einzentrieren erfolgt also zeitparallel zur Werkstückbearbeitung. Zwischen den Bearbeitungsvorgängen wird der Drehteller verschwenkt, so dass die beiden Werkstückspindeln ihre Position tauschen. Auf dem Drehteller befinden sich zwei Einzentriersonden, wobei jede dieser Einzentriersonden einer Werkstückspindel zugeordnet ist. Eine automatische Verstellung der Sondenposition ist nicht vorgesehen. Der Bediener muss deshalb beim Loswechsel immer beide Sonden manuell einrichten.

EP 0 524 943 B1 offenbart ein Sondenmodul mit einer kontaktierenden Sonde und einer kontaktlosen Sonde. Das Sondenmodul ist an einem Werkzeugträger einer Werkzugmaschine montiert.

DE 10 2009 059 331 A1 offenbart eine Honmaschine mit einem Sensor zur Bestimmung der Winkellage eines zu bearbeitenden Zahnrads.

DARSTELLUNG DER ERFINDUNG

Es ist eine Aufgabe der vorliegenden Erfindung, eine Maschine mit einer Einzentriervorrichtung anzugeben, bei der eine einfache Verstellung der Einzentriervorrichtung möglich ist.

Diese Aufgabe wird durch eine Maschine nach Anspruch 1 gelöst. Weitere Ausführungsformen sind in den abhängigen Ansprüchen angegeben.

Es wird also eine Maschine zur Bearbeitung vorverzahnter Werkstücke angegeben, welche aufweist:

> einen Werkstückträger;
> mindestens eine auf dem Werkstückträger angeordnete Werkstückspindel zur Aufspannung eines Werkstücks, wobei die Werkstückspindel zu einer Drehung um eine vertikal im Raum verlaufende Werkstückspindelachse antreibbar ist; und
> eine Einzentriervorrichtung, die einen Sondenhalter mit einer berührungslos arbeitenden Einzentriersonde umfasst, wobei der Sondenhalter eine axial und/oder radial veränderliche Lage relativ zur Werkstückspindelachse aufweist,
> wobei die Maschine mindestens einen Verstellantrieb aufweist, um die Lage des Sondenhalters relativ zur Werkstückspindelachse axial und/oder radial zu verändern, und
> wobei der Verstellantrieb auf einem Gegenständer des Werkstückträgers oberhalb der Einzentriervorrichtung angeordnet ist.

Auf diese Weise ist der Antrieb an einer Stelle angeordnet, an der er weder während des Bearbeitungsvorgangs noch beim Werkstückwechsel stört. Zudem steht auf dem Gegenständer genügend Platz für den oder die verhältnismässig grossen Antriebe zur Verfügung.

Insbesondere können auf dem Gegenständer mindestens ein erster Verstellantrieb und ein zweiter Verstellantrieb angeordnet sein, wobei der erste Verstellantrieb eine Lageveränderung des Sondenhalters zumindest axial zur Werkstückspindelachse bewirkt, und wobei der zweite Verstellantrieb eine Lageveränderung des Sondenhalters zumindest radial zur Werkstückspindelachse bewirkt.

In einer Weiterbildung weist die Maschine ein stationäres Maschinenbett auf, und der Werkstückträger ist gegenüber dem Maschinenbett zwischen mindestens zwei Stellungen um eine vorzugsweise vertikale Werkstückträgerachse schwenkbar. Die mindestens eine Werkstückspindel ist dann derart auf dem schwenkbaren Werkstückträger angeordnet, dass sie zwischen einer Arbeitsposition und einer Beladeposition bewegbar ist. Die Werkstückspindelachse verläuft dabei parallel zur Werkstückträgerachse und in einem Abstand von dieser. Die Einzentriervorrichtung ist dann auf dem Werkstückträger bevorzugt zwischen der Werkstückspindelachse und der Werkstückträgerachse angeordnet.

In hochproduktiven Ausführungsformen kann die Maschine zwei parallele Werkstückspindeln aufweisen, die beide auf dem beweglichen Werkstückträger angeordnet sind. Jede dieser Werkstückspindeln ist dann zur Aufspannung eines Werkstücks ausgebildet und zu einer Drehung um eine vertikal im Raum verlaufende Werkstückspindelachse antreibbar. In derartigen Ausführungsformen ist jeder Werkstückspindel jeweils eine Einzentriervorrichtung zugeordnet, wobei jede der Einzentriervorrichtungen einen Sondenhalter mit einer berührungslos arbeitenden Einzentriersonde umfasst und jeder der Sondenhalter eine axial und/oder radial veränderliche Lage relativ zur Werkstückspindelachse aufweist. Der mindestens eine Verstellantrieb ist dann dazu ausgebildet, die Lage jedes Sondenhalters relativ zur Werkstückspindelachse axial und/oder radial zu verändern Die Einzentriervorrichtungen sind dann vorzugsweise spiegelsymmetrisch oder achssymmetrisch zueinander aufgebaut und angeordnet.

Die Maschine kann einen gemeinsamen ersten Verstellantrieb aufweisen, um die Lage der Sondenhalter simultan mindestens axial zu verändern. Alternativ oder zusätzlich kann sie einen gemeinsamen zweiten Verstellantrieb aufweisen, um die Lage der Sondenhalter simultan mindestens radial zu verändern. Es ist aber auch möglich, für jede Einzentriervorrichtung hierfür jeweils separate Verstellantriebe vorzusehen.

In vorteilhaften Ausführungsformen umfasst die Einzentriervorrichtung einen Sondenhalter mit einer berührungslos arbeitenden Einzentriersonde und ein Basisglied. Der Sondenhalter ist derart mit dem Basisglied verbunden, dass er einen veränderlichen radialen Abstand zur Werkstückspindelachse aufweist. Dazu kann der Sondenhalter insbesondere derart mit dem Basisglied verbunden sein, dass er gegenüber dem Basisglied entlang einer Bogenbahn verschwenkbar ist, ohne seine Orientierung zu verändern. Insbesondere kann die Einzentriervorrichtung mindestens zwei Schwingen aufweisen, die den Sondenhalter mit dem Basisglied gelenkig verbinden und mit dem Sondenhalter und dem Basisglied eine Parallelogrammführung bilden. Es sind aber auch andere Mechanismen denkbar, um den Sondenhalter radial zur Werkstückspindelachse zu verstellen, z.B. eine radiale Linearführung zwischen Basisglied und Sondenhalter.

Um eine einfache Verstellung der Einzentriervorrichtung selbst bei sehr beengten Platzverhältnissen zu ermöglichen, ist das Basisglied vorzugsweise als Schlitten ausgebildet, der gegenüber dem Werkstückträger beweglich ist, und die Vorrichtung weist eine (axiale) Linearführung für das Basisglied auf, um eine Verschiebung des Basisglieds gegenüber dem Werkstückträger parallel zur Werkstückspindelachse zu ermöglichen.

Dadurch wird es möglich, auf sehr einfache Weise die gesamte Einzentriervorrichtung axial (d.h. parallel zur Werkstückspindelachse) zu verschieben, um die Einzentriersonde insgesamt sowohl radial als auch axial relativ zur Werkstückspindelachse bzw. zum Werkstück zu positionieren. Gleichzeitig beansprucht eine solche Anordnung aus Schlitten und Linearführung nur wenig Platz. Sie lässt sich ohne Weiteres in einem Bereich anordnen, der nicht in Kollision mit einer Beschickungsvorrichtung gelangen kann. Bei einem schwenkbaren Werkstückträger kann das insbesondere ein zentrumsnaher Bereich nahe der Schwenkachse des Werkstückträgers sein. Die vorgeschlagene verstellbare Einzentriervorrichtung eignet sich insbesondere dazu, von einem oder mehreren Antrieben automatisch verstellt zu werden. Dadurch kann eine axiale und/oder radiale Verstellung sogar während der Werkstückbearbeitung ermöglicht werden. Die Antriebe für die automatische radiale und axiale Verstellung lassen sich entfernt von der Einzentriervorrichtung anordnen. Insbesondere wenn die Werkstückspindelachse vertikal im Raum steht, lassen sich die Antriebe z.B. oberhalb der Einzentriervorrichtung anordnen, wo sie weder bei der Bearbeitung noch bei der Werkstückbeschickung stören. Automatische Antriebe sind besonders dann von Vorteil, wenn im Automatikbetrieb eine radiale und vertikale Verstellung der Einzentriersonde erforderlich ist. So fordern Einlehr- und Kontrollvorgänge, aber auch das Schleifen von Blockzahnrädern mit winkelgenauen Positionierungen der einzelnen Verzahnungen automatische Sondenverstellungen.

Der Gegenständer kann insbesondere einen Reitstock für die Werkstückspindel tragen; im vorliegenden Kontext wird als Gegenständer aber jede Struktur verstanden, die einen (bevorzugt starren) Teil des Werkstückträgers bildet und sich vertikal in einen Bereich oberhalb der Einzentriervorrichtung erstreckt.

Falls der Sondenhalter eine Parallelogrammführung zwischen Basisglied und Sondenhalter aufweist, bilden die parallelen Gelenkachsen, in denen die Schwingen, das Basisglied und der Sondenhalter miteinander gelenkig verbunden sind, bei einer Projektion in eine Ebene senkrecht zu diesen Gelenkachsen die Eckpunkte eines Parallelogramms. Dadurch ist der Sondenhalter gegenüber dem Basisglied in einer Schwenkebene, die senkrecht zu den Gelenkachsen verläuft, orientierungstreu entlang der Bogenbahn verschwenkbar.

Diese Schwenkebene verläuft vorzugsweise parallel zur Werkstückspindelachse bzw. enthält diese. Wenn die Werkstückspindelachse vertikal im Raum angeordnet ist, bedeutet dies, dass der Sondenhalter in einer ebenfalls vertikal verlaufenden Ebene verschwenkbar ist. Dadurch wird einerseits der Platzbedarf zusätzlich klein gehalten. Andererseits bleibt so die Winkellage der Einzentriersonde relativ zum Werkstück bei der Schwenkbewegung erhalten, so dass mögliche Einzentrierfehler vermieden werden.

Die Verschiebung der Einzentriervorrichtung parallel zur Werkstückspindelachse kann grundsätzlich manuell oder motorisch angetrieben erfolgen. Dazu kann die Maschine eine mit dem Basisglied verbundene erste Zugstange aufweisen, die sich parallel zur Werkstückspindelachse erstreckt. Mit Hilfe der Zugstange lässt sich das Basisglied gegenüber dem Werkstückträger parallel zur Werkstückspindelachse verschieben.

Zur Führung des Basisglieds kann die Maschine beidseitig der ersten Zugstange angeordnete Rollen aufweisen, zwischen denen die erste Zugstange längsgeführt ist. In diesem Fall können die erste Zugstange und die Rollen gemeinsam die Linearführung für das Basisglied bilden bzw. einen Teil dieser Linearführung bilden.

Um die Führung des Basisglieds zu verbessern, kann die Maschine eine auf dem Werkstückträger angeordnete Führungsplatte aufweisen, die eine parallel zur Werkstückspindelachse verlaufende Führungsfläche definiert. Das Basisglied kann dann eine zur Führungsfläche komplementäre Gleitfläche aufweisen, die verschiebbar auf der Führungsfläche gleitet, um eine Gleitführung für das Basisglied zu bilden. Um die Einzentriervorrichtung während des Einzentriervorgangs zusätzlich zu stabilisieren, kann in der Gleitfläche eine Saugöffnung vorgesehen werden, die dazu dient, das Basisglied mittels Unterdruck an der Führungsplatte zu fixieren. Dazu kann die Maschine eine Saugeinrichtung, z.B. in Form einer Vakuumpumpe, aufweisen, die mit der Saugöffnung verbindbar ist, um Unterdruck an der Saugöffnung zu erzeugen. Durch die Anwendung von Überdruck an der Saugöffnung lässt sich dann eine solche Fixierung ohne Weiteres wieder lösen, um die Einzentriervorrichtung zu verstellen. Entsprechend kann die Maschine eine Druckluftquelle aufweisen, die mit der Saugöffnung verbindbar ist, um Überdruck an der Saugöffnung zu erzeugen. Eine Leitung, die in der Saugöffnung mündet, kann wahlweise zwischen der Saugeinrichtung und der Druckluftquelle umschaltbar sein.

Die Verstellung kann, wie schon erwähnt, motorisch angetrieben erfolgen, insbesondere durch eine NC-Achse. Dazu kann die Maschine einen ersten Verstellantrieb, insbesondere einen NC-gesteuerten Servomotor, aufweisen. Ausserdem kann die Maschine eine mit dem ersten Verstellantrieb zusammenwirkende Gewindespindel aufweisen, die sich parallel zur Werkstückspindelachse erstreckt und die derart direkt oder indirekt mit dem Basisglied verbunden ist, dass eine Betätigung des ersten Verstellantriebs eine Verschiebung des Basisglieds parallel zur Werkstückspindelachse bewirkt.

In einer vorteilhaften Ausgestaltung ist der Verstellmechanismus wie folgt ausgebildet: Die Maschine weist eine mit dem Basisglied verbundene, rohrförmige erste Zugstange auf, die sich parallel zur Werkstückspindelachse erstreckt. Die Gewindespindel erstreckt sich axial in das Innere der rohrförmigen ersten Zugstange hinein. Die Maschine weist ausserdem eine Mutter auf, die starr mit der ersten Zugstange verbunden ist und die mit der Gewindespindel zusammenwirkt, um durch eine Drehung der Gewindespindel eine Verschiebung der Zugstange (und damit auch des Basisglieds) parallel zur Werkstückspindelachse zu bewirken. Die Gewindespindel ist durch den ersten Verstellantrieb zu einer Drehung antreibbar.

Es sind aber auch andere Ausgestaltungen denkbar, z.B. eine Ausgestaltung, bei der der erste Verstellantrieb eine Mutter für die Gewindespindel zu einer Drehung antreibt und die Gewindespindel drehfest und axial verschieblich ist. Allerdings benötigt eine solche Anordnung mehr Platz, da die Gewindespindel in ihrer oberen Endstellung unter Umständen sehr weit über den Verstellantrieb vorstehen kann.

Um die Lage der Einzentriersonde radial an unterschiedliche Werkstückdurchmesser anzupassen, kann eine Antriebswelle vorgesehen sein, die sich parallel zur Werkstückspindelachse erstreckt und gegenüber dem Basisglied drehbar ist. Am Basisglied kann dann ein Getriebe vorgesehen sein, um eine Drehbewegung der Antriebswelle in eine Bewegung umzuwandeln, die eine Veränderung des radialen Abstands des Sondenhalters von der Werkstückspindelachse bewirkt. Insbesondere wenn der Sondenhalter schwenkbar mit dem Basisglied verbunden ist, z.B. über die schon erwähnte Parallelogrammführung, kann das Getriebe die Drehbewegung in eine Schwenkbewegung des Sondenhalters umwandeln. Das Getriebe kann z.B. eine Schnecke oder ein Ritzel auf der Antriebswelle sowie ein Abtriebsrad umfassen, das mit der Schnecke bzw. dem Ritzel zusammenwirkt. Das Abtriebsrad kann dann starr mit einer der Schwingen der Parallelogrammführung verbunden sein oder auf andere Weise auf eine oder mehrere Schwingen einwirken. Selbstverständlich können aber auch andere Getriebeanordnungen eingesetzt werden.

Ein solches Getriebe weist in der Regel Spiel bezüglich der Schwenkrichtung auf, das dadurch zustande kommt, dass die Zahnflanken der verzahnten Getriebeelemente (wie Schnecke bzw. Ritzel und Abtriebsrad) je nach Lastrichtung an zwei gegenüberliegenden Flanken aneinander anliegen können. Um das durch einen Flankenwechsel bedingte Spiel zu vermeiden, kann die Maschine eine Feder aufweisen, die eine Gegenlast in Form einer Rückstellkraft bzw. eines rückstellenden Drehmoments erzeugt, wobei diese Gegenlast sicherstellt, dass die verzahnten Getriebeelemente im Betrieb des Getriebes immer an denselben Flanken anliegen. Die Federkraft kann zusätzlich zur Gewichtskraft der bewegten Teile wirken und die Wirkung der Gewichtskraft insofern unterstützen. Die Feder vermeidet also durch die von ihr erzeugte Gegenlast, ggfs. im Zusammenwirken mit der Gewichtskraft der bewegten Teile, einen Flankenwechsel im Getriebe. Bei der Feder kann es sich insbesondere um eine Druck- oder Zugfeder, bevorzugt eine Gasfeder handeln, die zwischen dem Basisglied und dem Sondenhalter angeordnet ist. Im Falle einer Parallelogrammführung ist die Feder vorzugsweise innerhalb der Schwenkebene diagonal zur Parallelogrammführung angeordnet, so dass die Feder beim Verschwenken der Parallelogrammführung ihre Länge ändert. Insbesondere kann die Feder diagonal zwischen den Gelenkachsen der Parallelogrammführung angeordnet sein.

Die Antriebswelle kann manuell drehbar sein, oder sie kann motorisch angetrieben sein, insbesondere durch eine NC-Achse. Dazu kann die Maschine einen zweiten Verstellantrieb, insbesondere einen NC-gesteuerten Servomotor, aufweisen. Um die Drehbewegung des zweiten Verstellantriebs auf die Antriebswelle zu übertragen, kann die Maschine eine Keilwelle aufweisen, die vom zweiten Verstellantrieb zu einer Drehbewegung um ihre Längsachse antreibbar ist und die sich parallel zur Werkstückspindelachse erstreckt. Die Maschine kann dann ausserdem eine mit der Antriebswelle verbundene Keilnabe aufweisen, die längsverschieblich und drehfest mit der Keilwelle in Eingriff steht, um eine Drehbewegung des zweiten Verstellantriebs auf die Antriebswelle zu übertragen. Indem die Keilnabe axial auf der Keilwelle verschieblich ist, kann sehr präzise ein Drehmoment übertragen werden, während Änderungen des axialen Abstands zwischen dem zweiten Verstellantrieb und dem Basisglied ausgeglichen werden können.

In einer alternativen Ausführungsform wird die Schwenkbewegung des Sondenhalters durch einen Hebelmechanismus bewirkt, der mit einer zweiten Zugstange betätigt wird. Dazu weist die Maschine eine zweite Zugstange auf, die sich parallel zur Werkstückspindelachse erstreckt und die relativ zum Basisglied axial verschieblich ist. Die Maschine weist weiter einen Hebelmechanismus auf, der die zweite Zugstange derart mit der Einzentriervorrichtung verbindet, dass eine axiale Verschiebung der Zugstange relativ zum Basisglied eine Veränderung des radialen Abstands des Sondenhalters von der Werkstückspindelachse bewirkt. Dazu kann der Hebelmechanismus einen schwenkbaren Hebelarm aufweisen, der den Sondenhalter und das Basisglied verbindet und an dem dazwischen die zweite Zugstange angreift. Die Zugstange kann über ein schwenkbares Zwischenstück als Ausgleichsglied mit dem Hebelarm verbunden sein, um die Bogenbewegung des Hebelarms auszugleichen.

Die Betätigung der zweiten Zugstange kann motorisch erfolgen, insbesondere durch eine NC-Achse. Dazu kann die Maschine einen zweiten Verstellantrieb, insbesondere einen NC-gesteuerten Servomotor, aufweisen, der mit einer zweiten Gewindespindel zusammenwirkt. Diese erstreckt sich dann parallel zur Werkstückspindelachse und ist derart mit der zweiten Zugstange verbunden, dass eine Betätigung des zweiten Verstellantriebs eine Verschiebung der zweiten Zugstange parallel zur Werkstückspindelachse bewirkt.

In einer nochmals weiteren Ausführungsform weist die Maschine einen Hilfsschlitten auf, der relativ zum Werkstückträger und relativ zum Basisglied parallel zur Werkstückspindelachse verschiebbar ist. Mit dem Hilfsschlitten und der Einzentriervorrichtung ist mindestens ein Hilfsarm verbunden, so dass eine Verschiebung des Hilfsschlittens relativ zum Basisglied eine Veränderung des radialen Abstands des Sondenhalters von der Werkstückspindelachse bewirkt. Vorzugsweise ist der Hilfsarm gelenkig zwischen dem Hilfsschlitten und dem Sondenhalter angebracht, so dass er eine Hilfsschwinge bildet.

Um den Hilfsschlitten einfach axial verschieben zu können, kann mit dem Hilfsschlitten eine zweite Zugstange verbunden sein, die sich parallel zur Werkstückspindelachse erstreckt, um den Hilfsschlitten parallel zur Werkstückspindelachse zu verschieben. Insbesondere können sowohl das als Schlitten ausgebildete Basisglied als auch der Hilfsschlitten mit parallelen Zugstangen verbunden sein und mit Hilfe dieser Zugstangen separat voneinander verschoben werden, um so die Lage des Sondenhalters sowohl bezüglich der axialen Richtung parallel zur Werkstückspindelachse als auch bezüglich der radialen Richtung senkrecht zur Werkstückspindelachse einzustellen.

Um eine motorische Verschiebung des Hilfsschlittens zu ermöglichen, kann die Maschine einen zweiten Verstellantrieb aufweisen, insbesondere einen NC-gesteuerten Servomotor. Mit dem zweiten Verstellantrieb kann eine zweite Gewindespindel zusammenwirken, die sich parallel zur Werkstückspindelachse erstreckt und die derart direkt oder indirekt mit dem Hilfsschlitten verbunden ist, dass eine Betätigung des zweiten Verstellantriebs eine Verschiebung des Hilfsschlittens parallel zur Werkstückspindelachse bewirkt. Insbesondere können also sowohl das Basisglied als auch der Hilfsschlitten auf die gleiche Weise mittels zugeordneter Verstellantriebe und Gewindespindeln verschoben werden.

Eine nochmals andere Anordnung zum Verschwenken des Sondenhalters kann bei der schon erwähnten Parallelogrammführung vorgesehen sein. Dabei ist zwischen dem Basisglied und dem Sondenhalter eine diagonal zur Parallelogrammführung angeordnete Verstellspindel mit einer damit zusammenwirkenden Gegenmutter vorgesehen. Indem die effektive Länge der Verstellspindel zwischen Basisglied und dem Sondenhalter verändert wird, kann die Schwenkposition des Sondenhalters relativ zum Basisglied verändert werden. Insbesondere kann die Verstellspindel diagonal zwischen den Gelenkachsen der Parallelogrammführung angeordnet sein. Eine solche Anordnung eignet sich insbesondere für eine manuelle Verstellung der Schwenkposition des Sondenhalters.

Der Werkstückträger kann relativ zum Maschinenbett stationär sein. In vorteilhaften Ausführungsformen ist der Werkstückträger allerdings gegenüber dem Maschinenbett zwischen mindestens zwei Stellungen bewegbar, insbesondere schwenkbar, vorzugsweise um eine vertikale Werkstückträgerachse schwenkbar, um die Werkstückspindel(n) zwischen mindestens einer Arbeitsposition und einer Beladeposition zu bewegen.

In einer vorteilhaften Ausgestaltung weist die Vorrichtung ein stationäres Maschinenbett auf, und der Werkstückträger ist gegenüber dem Maschinenbett zwischen mindestens zwei Stellungen um eine vorzugsweise vertikale Werkstückträgerachse schwenkbar. Die mindestens eine Werkstückspindel ist dann derart auf dem schwenkbaren Werkstückträger angeordnet, dass sie zwischen einer Arbeitsposition und einer Beladeposition bewegbar ist. Die Werkstückspindelachse verläuft dabei parallel zur Werkstückträgerachse und in einem Abstand von dieser. Die Werkstückspindelachse vollführt also bei einer Drehung des Werkstückträgers um die Werkstückträgerachse eine kreisbogenförmige Bewegung. Die Einzentriervorrichtung ist dann auf dem Werkstückträger bevorzugt zwischen der Werkstückspindelachse und der Werkstückträgerachse angeordnet. In anderen Worten befindet sich die Einzentriervorrichtung bevorzugt in einem zentrumsnahen Bereich des Werkstückträgers. Auf diese Weise wird verhindert, dass die Einzentriervorrichtung mit einem Greifer einer Werkstückbeschickungsvorrichtung oder mit dem Schleifwerkzeug kollidiert.

In hochproduktiven Ausführungsformen kann die Maschine zwei parallele Werkstückspindeln aufweisen, die beide auf dem beweglichen Werkstückträger angeordnet sind. Jede dieser Werkstückspindeln ist dann zur Aufspannung eines Werkstücks ausgebildet und zu einer Drehung um eine Werkstückspindelachse antreibbar. In derartigen Ausführungsformen ist jeder Werkstückspindel jeweils eine Einzentriervorrichtung zugeordnet, wobei jede der Einzentriervorrichtungen einen Sondenhalter mit einer berührungslos arbeitenden Einzentriersonde und ein parallel zur Werkstückspindelachse verschiebbares Basisglied umfassen kann, und wobei der Sondenhalter derart mit dem Basisglied verbunden sein kann, dass der Sondenhalter einen veränderlichen radialen Abstand zur Werkstückspindelachse hat. Insbesondere können dazu wiederum mindestens zwei Schwingen vorgesehen sein, die mit dem Sondenhalter und dem Basisglied eine Parallelogrammführung bilden. Die Einzentriervorrichtungen sind dann vorzugsweise spiegelsymmetrisch oder achssymmetrisch zueinander aufgebaut und angeordnet.

Die Maschine kann in solchen Ausführungsformen einen gemeinsamen ersten Verstellantrieb aufweisen, um die Basisglieder der beiden Einzentriervorrichtungen simultan parallel zur Werkstückspindelachse zu verschieben. Alternativ oder zusätzlich kann sie einen gemeinsamen zweiten Verstellantrieb aufweisen, um den radialen Abstand der beiden Sondenhalters von der Werkstückspindelachse simultan zu verändern, also z.B. die Sondenhalter der beiden Einzentriervorrichtungen simultan gegenüber dem jeweiligen Basisglied zu verschwenken. Es ist aber auch möglich, für jede Einzentriervorrichtung jeweils separate Verstellantriebe vorzusehen, um das Basisglied jeder Einzentriervorrichtung jeweils einzeln parallel zur Werkstückspindelachse zu verschieben und/oder den Sondenhalter jeder Einzentriervorrichtung jeweils einzeln radial zu verstellen, also z.B. gegenüber dem entsprechenden Basisglied zu verschwenken. Wenn jede der beiden Einzentriervorrichtungen separat sowohl axial als auch radial verstellbar ist, bedeutet das, dass insgesamt vier separate Verstellantriebe vorhanden sind.

Eine Anordnung der Verstellantriebe auf einem Gegenständer oberhalb der Einzentriervorrichtung ist auch dann von Vorteil, wenn die Einzentriervorrichtung anders als in der vorstehend beschriebenen Weise aufgebaut ist.

Alle weiteren Überlegungen im Zusammenhang mit einer Maschine, deren Einzentriervorrichtung ein axial verschiebbares Basisglied aufweist, gelten sinngemäss ebenfalls für Ausführungsformen, bei denen die Einzentriervorrichtung anders aufgebaut ist. So kann die Maschine eine mit der Einzentriervorrichtung verbundene erste Zugstange aufweisen, die sich parallel zur Werkstückspindelachse erstreckt. Mit Hilfe der ersten Zugstange lässt sich die Lage des Sondenhalters gegenüber dem Werkstückträger mindestens axial (parallel zur Werkstückspindelachse, in diesem Fall also vertikal) verstellen. Zur Führung der Einzentriervorrichtung kann die Maschine wiederum beidseitig der ersten Zugstange angeordnete Rollen aufweisen, zwischen denen die erste Zugstange längsgeführt ist. In diesem Fall können die erste Zugstange und die Rollen gemeinsam eine Linearführung für die Einzentriervorrichtung bilden bzw. einen Teil dieser Linearführung bilden. Die Verstellung kann, wie schon erwähnt, motorisch angetrieben erfolgen, insbesondere durch eine NC-Achse. Dazu kann die Maschine einen ersten Verstellantrieb, insbesondere einen NC-gesteuerten Servomotor, aufweisen. Ausserdem kann die Maschine eine mit dem ersten Verstellantrieb zusammenwirkende Gewindespindel aufweisen, die sich parallel zur Werkstückspindelachse erstreckt und die derart direkt oder indirekt mit der Einzentriervorrichtung verbunden ist, dass eine Betätigung des ersten Verstellantriebs zumindest eine axiale Lageveränderung des Sondenhalters parallel zur Werkstückspindelachse bewirkt. Die weiteren dargestellten Überlegungen für die Ausgestaltung des Verstellmechanismus gelten hier sinngemäss. Auch gelten sämtliche obigen Überlegungen für die radiale Verstellung der Lage des Sondenhalters sinngemäss.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1 eine schematische Draufsicht auf eine Verzahnmaschine des Standes der Technik nach WO 00/35621 A1;
Fig. 2 eine isometrische Ansicht einer Verzahnmaschine gemäss einer ersten Ausführungsform der vorliegenden Erfindung;
Fig. 3 eine isometrische Ansicht des Werkstückträgers der Verzahnmaschine nach Fig. 2;
Fig. 4 eine vergrösserte Detailansicht A von Fig. 3, die insbesondere die Einzentriervorrichtung besser erkennen lässt;
Fig. 5 eine isometrische Ansicht der Einzentriervorrichtungen und der zugehörigen Verstellmechanismen beim Werkstückträger nach Fig. 3;
Fig. 6 eine vergrösserte Detailansicht des Details B in Fig. 5;
Fig. 7 eine Vorderansicht der Parallelkinematik der Einzentriervorrichtung nach Fig. 3 am grössten Werkstückdurchmesser T;
Fig. 8 eine Vorderansicht der Parallelkinematik am kleinsten Werkstückdurchmesser S;
Fig. 9 eine isometrische Ansicht von Antriebskomponenten für die Einzentriervorrichtung beim Werkstückträger nach Fig. 2;
Fig. 10 eine Draufsicht auf die Antriebskomponenten nach Fig. 9, ohne Servoantriebe;
Fig. 11 eine isometrische Schnittansicht des Werkstückträgers nach Fig. 3;
Fig. 12 eine Vorderansicht der Einzentriervorrichtungen und der zugehörigen Verstellmechanismen beim Werkstückträger nach Fig. 3, teilweise in Schnittdarstellung;
Fig. 13 eine isometrische Teilansicht einer Verzahnmaschine gemäss einer zweiten Ausführungsform;
Fig. 14 eine Explosionsansicht der Einzentriervorrichtung nach Fig. 13;
Fig. 15 eine isometrische Teilansicht einer Verzahnmaschine gemäss einer dritten Ausführungsform ohne Reitstock und Werkstück;
Fig. 16 eine isometrische Teilansicht einer Verzahnmaschine gemäss einer Ausführungsform, die nicht unter die vorliegenden Ansprüche fällt; und
Fig. 17 eine isometrische Teilansicht einer Verzahnmaschine gemäss einer Ausführungsform, die auch nicht unter die vorliegenden Ansprüche fällt.

BESCHREIBUNG BEVORZUGTER AUSFÜHRUNGSFORMEN

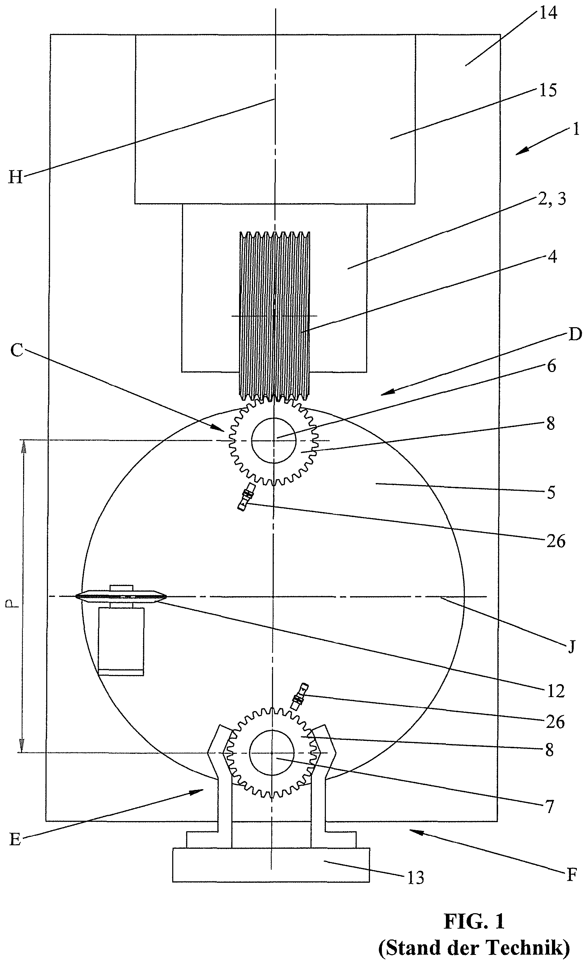

Die Figur 1 zeigt eine schematische Draufsicht auf eine Zahnradschleifmaschine 1 des Standes der Technik nach WO 00/35621 A1, die zur Bearbeitung vorverzahnter Werkstücke 8 dient. Zwei vertikale Werkstückspindeln 6, 7, die jeweils eine Werkstückspindelachse definieren, und eine schwenkbare Abrichteinheit 12 sind auf einem schwenkbaren Werkstückträger 5 in Form eines Drehtisches angeordnet. Die Werkstückspindeln haben zueinander einen Abstand P. Der Werkstückträger 5 ist um eine zentrale vertikale Werkstückträgerachse verschwenkbar. Er ist auf einem Maschinenbett 14 angeordnet, welches weiterhin einen verschieblichen Werkzeugträger 15 trägt. Auf dem Werkzeugträger 15 ist ein vertikal zustellbarer Z-Schlitten angeordnet, der wiederum einen schwenkbaren Schleifkopf 3 trägt. Auf dem Schleifkopf 2 ist ein längsverschieblicher Schleifschlitten 2 mit Schleifschnecke 4 angeordnet. Der Arbeitsraum D ist durch eine nicht dargestellte, dichte Haube und das Maschinenbett 14 öldicht umschlossen. Das Schleiföl wird über dieses Maschinenbett 14 in eine nicht dargestellte Kühlmittelanlage zurückgeführt. Wird nun nach der Bearbeitung eines Zahnrades 8 die erste Werkstückspindel 6 in die Parkposition E geschwenkt, dann gelangt dieses Zahnrad 8 aus dem verschmutzten und verölten Arbeitsraum D in den relativ sauberen Handlingsraum F. In dieser Parkposition E kann dann der automatisierte Werkstückwechsel durch einen Greifer 13 einer Werkstückbeschickungseinrichtung erfolgen. Im manuellen Betrieb führt dies ein Bediener durch. Die Schnittstelle zwischen diesem Arbeitsraum D und dem Handlingsraum F liegt im Bereich der in Fig. 1 dargestellten Mittenebene J.

Für das Einzentrieren sind auf dem schwenkbaren Werkstückträger 5 zwei Einzentriersonden 26 angeordnet. Diese sind unmittelbar an der Aussenkontur der auszumessenden Werkstückverzahnung so angeordnet, dass keine Kollision mit der Schleifschnecke 4 oder dem Greifer 13 eintreten kann. Damit entfällt die bekannte Zu- und Rückbewegung der Einzentriersonden aus der Messposition am Werkstück in eine kollisionsfreie Parkposition am Maschinenbett bei jedem Werkstückwechsel. Eine automatische Verstellung der Sondenposition ist nicht vorgesehen und wegen der beengten Platzverhältnisse auch nicht leicht zu realisieren. Der Bediener muss deshalb beim Loswechsel immer beide Einzentriersonden 26 manuell einrichten.

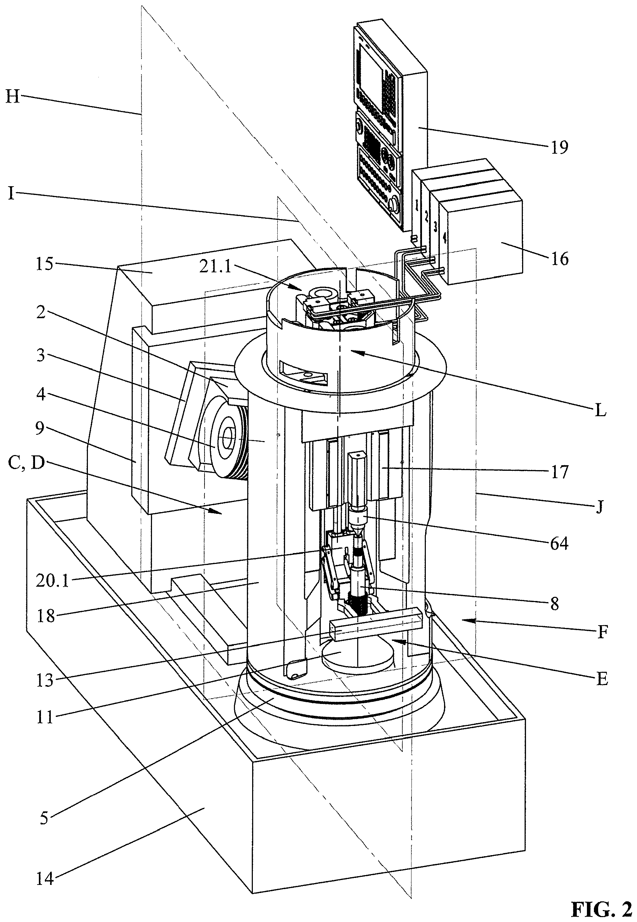

Ein erstes Ausführungsbeispiel einer erfindungsgemässen Maschine zur Bearbeitung vorverzahnter Werkstücke ist in den Figuren 2-12 dargestellt. Gleich oder ähnlich wirkende Bauteile sind mit den gleichen Bezugszeichen wie in der Fig. 1 bezeichnet.

Auch diese Maschine weist ein Maschinenbett 14 auf, auf dem ein schwenkbarer Werkstückträger 5 in Form eines Drehtisches oder Drehturms angeordnet ist. Der Werkstückträger 5 ist um eine vertikale Werkstückträgerachse L verschwenkbar. Gegenüber dem Werkstückträger 5 befindet sich wiederum ein radial zur Werkstückträgerachse L zustellbarer Werkzeugträger 15. Dieser trägt einen vertikal verschiebbaren Z-Schlitten 9, auf dem ein schwenkbarer Schleifkopf 3 angeordnet ist. Der Schleifkopf 3 trägt wiederum einen Schleifschlitten 2 mit einer Schleifspindel, die eine Schleifschnecke 4 zu einer Drehung antreibt. Der Schleifschlitten 2 ist auf dem Schleifkopf 3 entlang der Schleifspindelachse längsverschieblich angeordnet (Shiftachse). Die Werkstückträgerachse L und die Zustellrichtung des Werkzeugträgers 15 definieren gemeinsam eine Mittenebene H der Maschine als Ganzes.

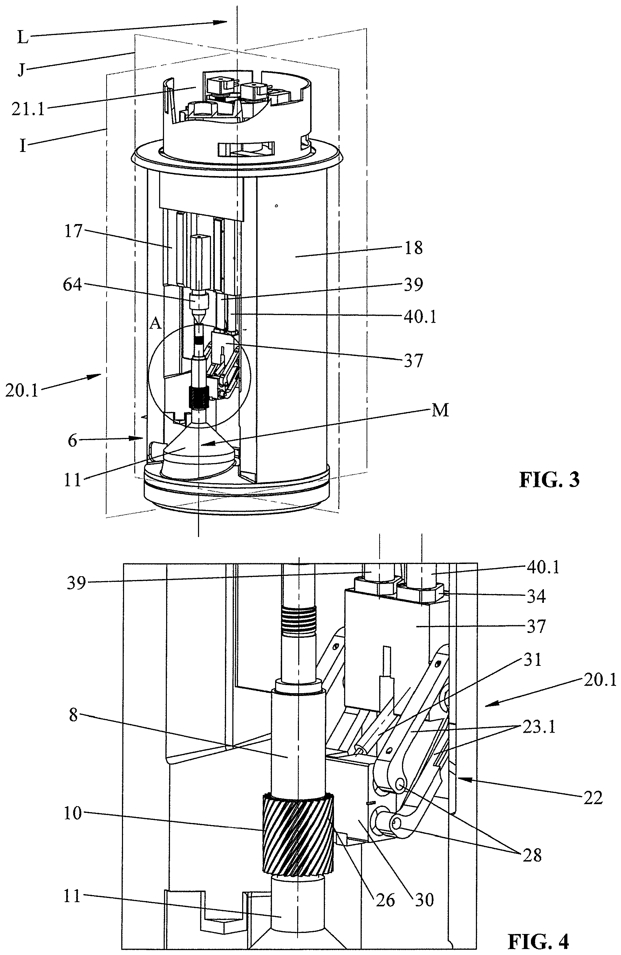

Auf dem Werkstückträger 5 sind zwei Werkstückspindeln 6, 7 angeordnet, die sich bezüglich der Werkstückträgerachse L diametral gegenüber stehen. Jede der Werkstückspindeln 6, 7 definiert eine Werkstückspindelachse M (Fig. 3). Die Werkstückspindeln 6, 7 sind jeweils zwischen einer Arbeitsposition C und einer Parkposition E verschwenkbar. In der Arbeitsposition C befindet sich die jeweilige Werkstückspindel in einem Arbeitsraum D. In der Parkposition E befindet sich die jeweilige Werkstückspindel in einem Handlingsraum F. In dieser Parkposition E erfolgt der automatisierte Werkstückwechsel durch einen nur schematisch dargestellten Greifer 13 einer Werkstückbeschickungseinrichtung.

Die Werkstückspindelachsen M definieren gemeinsam eine erste vertikale Mittenebene I des Werkstückträgers. Dazu senkrecht verläuft eine zweite vertikale Mittenebene J des Werkstückträgers, welche die Werkstückträgerachse L enthält. Bei einer Schwenkbewegung des Werkstückträgers verändern die Mittenebenen I, J des Werkstückträgers gegenüber der Mittenebene H der Maschine ihre Orientierung.

Der Werkstückträger 5 umfasst einen Gegenständer 18, der sich zwischen den Werkstückspindeln 6, 7 nach oben erstreckt und die Reitstöcke 17 für die beiden Werkstückspindeln trägt. Im Betrieb werden vorverzahnte Werkstücke 8 mittels Werkstückaufspannungen 11 auf den Werkstückspindeln 6, 7 und wahlweise auch zusätzlich mit Zentrierspitzen 64 auf den Reitstöcken 17 gehalten.

Zwischen den Werkstückspindelachsen befinden sich nahe der zweiten Mittenebene J zwei symmetrisch zur Werkstückträgerachse angeordnete, identische Einzentriervorrichtungen 20.1. Diese sind synchron vertikal gegenüber dem Werkstückträger 5 und dem Gegenständer 18 verschieblich. Die Einzentriervorrichtungen 20.1 weisen jeweils eine Einzentriersonde auf. Die Einzentriersonden sind synchron radial in der ersten Mittenebene I zu den Werkstückspindelachsen M hin einschwenkbar, wie nachstehend noch näher beschrieben wird.

Um die Einzentriervorrichtungen synchron vertikal zu verschieben und die Einzentriersonden synchron einzuschwenken, weist die Maschine eine zentrale Antriebseinheit 21.1 auf. Diese ist fest auf der Oberseite des Gegenständers 18 angeordnet. Die Antriebseinheit 21.1 wird von einer CNC-Steuerung 16 angesteuert. Diese kann mittels einer Bedientafel 19 bedient werden. Damit können die synchronen Positionen beider Einzentriersonden automatisch auch während des Schleifprozesses verändert werden. Dieses Merkmal eröffnet die Möglichkeit zum Schleifen von Blockverzahnungen, wobei beide Verzahnungen winkelgenau zueinander zu fertigen sind.

Der Aufbau der Einzentriervorrichtungen 20.1 geht insbesondere aus den Figuren 3-6 hervor.

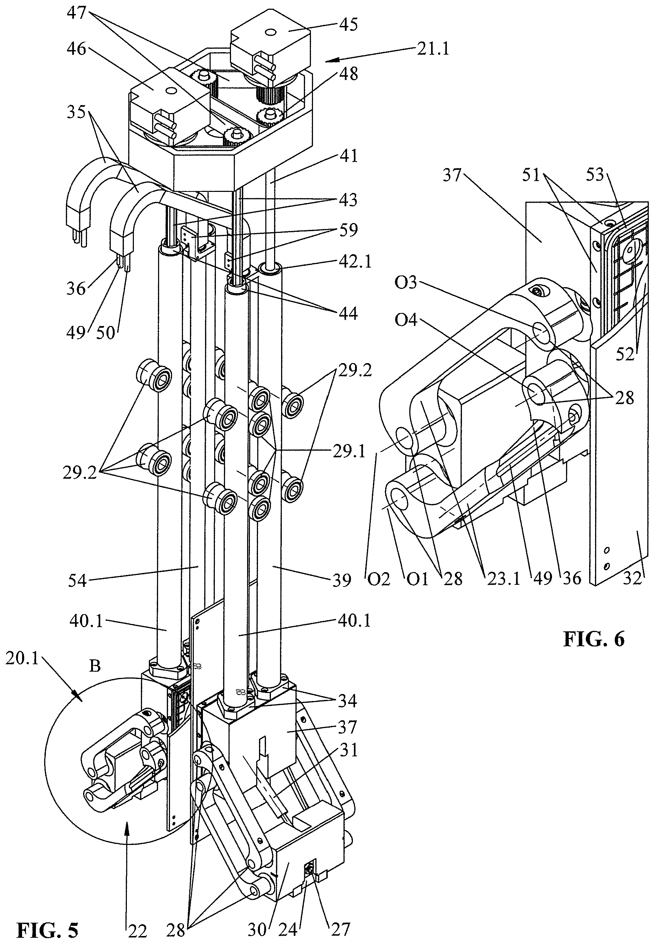

Jede Einzentriervorrichtung weist ein Basisglied 37 auf, das als vertikal verschiebbarer Schlitten ausgebildet ist, sowie einen Sondenhalter 30, der eine leicht auswechselbare Einzentriersonde 26 trägt. Basisglied 37 und Sondenhalter 30 sind über mehrere Schwingen 23.1 gelenkig verbunden. Jeweils zwei dieser Schwingen 23.1, die auf der gleichen Seite des Basisglieds und des Sondenhalters angeordnet sind, bilden gemeinsam mit dem Basisglied und dem Sondenhalter einen Doppelschwingentrieb 22. Die beiden Doppelschwingentriebe definieren eine Parallelogrammführung, d.h. die parallelen Gelenkachsen O1-O4 (Fig. 6), um die die Schwingen gelenkig mit dem Basisglied und dem Sondenhalter verbunden sind, bilden bei einer Projektion in eine Ebene senkrecht zu diesen Gelenkachsen (d.h. in die Mittenebene I) die Eckpunkte eines Parallelogramms. Dadurch ist der Sondenhalter 30 gegenüber dem Basisglied 37 in der Mittenebene I entlang einer Bogenbahn in Richtung der Werkstückverzahnung 10 verschwenkbar. Dabei wird der Sondenhalter 30 durch die beiden Doppelschwingentriebe 22 exakt parallel zum vertikal verschieblichen Basisglied 37 gehalten.

In den Gelenkachsen O1-O4 der Schwingen 23.1 sind spielfreie, steife, vorgespannte und wälzgelagerte Drehgelenke 28 mit Dichtungen angeordnet. Das Basisglied 37 beansprucht keinen Platz im kritischen Raum hinter der Werkstückverzahnung 10, da es sich in jeder Vertikalposition immer über der Werkstückverzahnung 10 befindet. Die Schwingen 23.1 sind Gleichteile, gleich lang und thermosymmetrisch angeordnet. Thermische Einwirkungen durch die schnell drehende Schleifschnecke 4 können somit keine Schiefstellung der Sonde 26 bewirken.

Als Einzentriersonden 26 können aus dem Stand der Technik bekannte induktive oder kapazitive Sensoren eingesetzt werden. Diese berührungslos arbeitenden Sensoren verursachen beim Einzentrieren keine Messkraft. Häufig sind für kleine Modulgrössen Einzentriersonden mit kleinem Durchmesser und für grössere Modulgrössen grössere Durchmesser erforderlich. Deshalb werden die Einzentriersonden 26 im Sondenhalter 30 mittels Adapterteil 24 aufgenommen, welches gegenüber dem Sondenhalter 30 verschieblich angeordnet ist. Beim Sensorwechsel im Einrichtebetrieb kann über dieses Adapterteil 24 die Feinjustierung der Stirnfläche 27 der jeweiligen Einzentriersonde 26 erfolgen.

Um das als Schlitten ausgebildete Basisglied 37 entlang der Vertikalen linear zu führen, weist die Maschine für jede Einzentriervorrichtung eine Linearführung auf. Diese wird durch zwei zylindrische Führungsrohre 39, 40.1 und damit zusammenwirkende starr, aber drehbar aufgenommene Laufrollen 29.1 und elastisch und drehbar aufgenommene Laufrollen 29.2 gebildet. Jede Laufrolle weist eine im Längsschnitt konkav gekrümmte Lauffläche auf. Jedes der zylindrischen Führungsrohre 39, 40.1 ist zwischen zwei übereinander angeordneten Paaren von Laufrollen 29.1, 29.2 nach Art einer zylindrischen Rundführung geführt. Die Laufrollen 29.1 und 29.2 sind dazu derart am Gegenständer montiert, dass beim Einfahren der Rohre 39, 40.1 eine federnde Vorspannkraft zwischen den Laufrollen jedes Paares entsteht. Dadurch bildet jedes der Führungsrohre 39, 40.1 mit jeweils zwei übereinander angeordneten Paaren von Laufrollen 29.1, 29.2 eine spielfreie, vorgespannte Linearführung Die Linearführungen sind als Gleichteile ausgebildet. Sie sind sehr kostengünstig herstellbar. Die Rohre 39, 40.1 sind mittels Klemmstücken 34 justierbar mit dem Basisglied 37 der jeweiligen Einzentriervorrichtung verbunden. Wie nachstehend noch näher erläutert wird, bildet das jeweilige Führungsrohr 39 eine Zugstange, mit der die entsprechende Einzentriervorrichtung vertikal verstellt werden kann.

Jedes Basisglied 37 trägt neben den beiden für die Führung dienenden Führungsrohren 39 und 40.1 noch ein Schutzrohr 54, welches am oberen Ende mittels Klemmstück 59 mit einer Energiekette 35 verbunden ist (siehe Fig. 5). Diese nimmt ein Elektrokabel zur Sonde 36 sowie zwei Zuleitungen 49 und 50 zur Luftzufuhr auf. Das Schutzrohr 54 ist so ausgelegt, das bei Bedarf noch weitere Leitungen für andere Sensoren wie z.B. Ultraschall, Laser oder Temperatur untergebracht werden können. Mit einem Temperatursensor kann z.B. ein Korrekturwert zur Längendehnung der relativ langen Linearführungen 39 und 40 ermittelt werden, mit dem dann die CNC-Steuerung 16 diese Störwerte eliminiert. Das Elektrokabel 36 wird aus dem unteren Ende des Schutzrohres 54 über das Basisglied 37 und über eine Schwinge 23.1 zur Sonde 26 geführt. Weiterhin wird Druckluft für die Reinigung der Sonde 26 über eine Zuleitung 49 und über Bohrungen im Schlitten 37, Drehgelenk 28, Schwinge 23.1 und den Sondenhalter 30 zugeführt (siehe Fig. 6).

Im Basisglied 37 führt ein Druckluftabzweig auf die Rückseite des Basisglieds. Die Rückseite ist mit einer gleitenden Kunststoffschicht versehen (siehe Fig. 6), vorzugsweise aus SKC™-Gleitbelag, in der eine umlaufende Nut und mehrere Aussparungen 53 angebracht sind. Nut und Aussparungen 53 sind über ein ca. 1 mm tiefes Gitternetz verbunden. Eine weitere kreisrunde Aussparung 52 ist im Zentrum dieser Kunststoffschicht angeordnet und wird über eine zweite Bohrung im Schlitten 37 mit einer Zuleitung 50 versorgt. Die wirkenden Aussparungen 52 und 53 sind nicht miteinander verbunden. Wird nun in der eingestellten vertikalen Messposition G die Zuleitung 50 mit Unterdruck versorgt, dann saugt sich der Schlitten 37 fest an eine Platte 32 am Gegenständer 18 und fixiert diesen. Soll der Schlitten 37 dann wieder verfahren werden, dann wird die Luftzufuhr an der Zuleitung 50 auf Druckluft umgeschaltet, und zusammen mit der schon eingeschalteten Druckluft aus Zuleitung 49 sowie den Abstreifern 51 wird die Platte 32 gereinigt. Der Reinigungseffekt ist beim Einsatz einer antimagnetischen Platte 32 besser, weil die elektrostatisch aufgeladenen Schleifspäne dann nicht anhaften können. Beim erneuten Fixieren wird die Luftzufuhr 50 wieder auf Unterdruck umgeschaltet, und das verschiebliche Basisglied 37 saugt sich erneut fest.

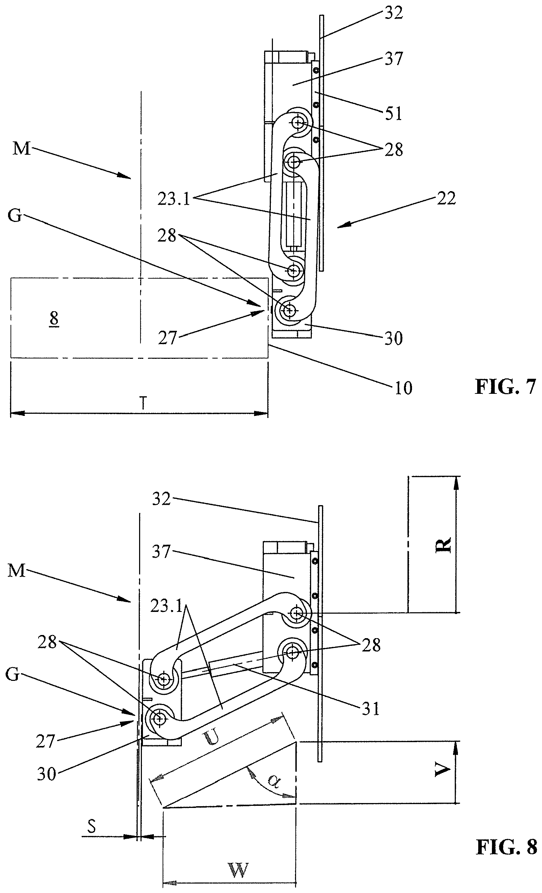

In den Figuren 7 und 8 ist der Doppelschwingentrieb 22 für das grösste Zahnrad 8 (Durchmesser T) und das kleinste Zahnrad (Durchmesser S) dargestellt. Der Schwenkwinkel $\alpha$ liegt allgemein zwischen 0° und 90°. Der maximale vertikale Verschiebehub des Basisglieds wird als R bezeichnet. Der durch ein Schwenken des Sondenhalters 30 entstehende radiale Zustellhub W verursacht immer auch einen vertikalen Zusatzhub V. Bei einer Schwingenlänge U gilt somit:

$$0° < \alpha < 90° \qquad (1)$$

$$W = U * \sin \alpha \qquad (2)$$

$$V = U * \cos \alpha \qquad (3)$$

$$W = V * \tan \alpha \qquad (4)$$

Dieser vertikale Zusatzhub V muss also zum vertikalen Hub R bei der vertikalen Positionierung des Sondenhalters 30 addiert werden. Die beiden Figuren zeigen weiterhin, dass das Basisglied 37 immer oberhalb der Werkstückverzahnung 10 angeordnet ist und damit keinen Bauraum dahinter beansprucht.

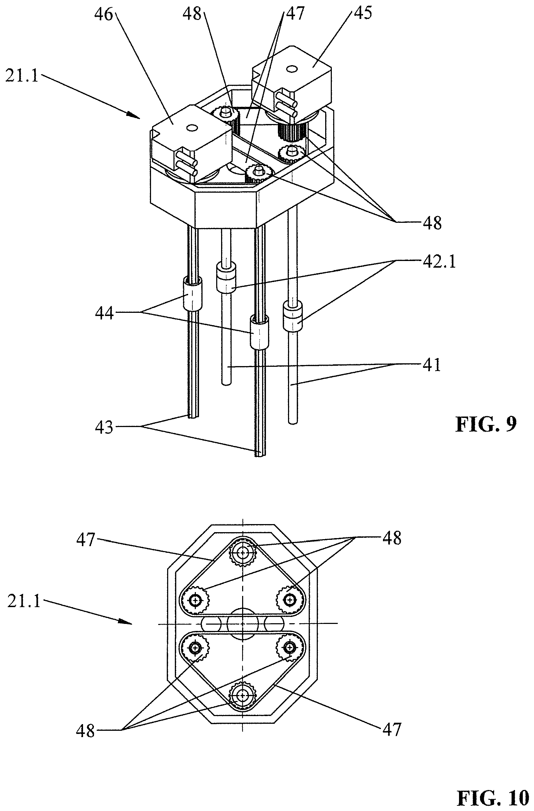

In der Figur 5 ist eine Antriebseinheit 21.1 erkennbar. Diese dient dazu, die Lage der beiden Einzentriervorrichtungen 20.1 entlang der Vertikalen sowie den Schwenkwinkel der Doppelschwingentriebe 22 motorisch zu verstellen. Die Figuren 9 und 10 illustrieren die Antriebseinheit 21.1 in weiteren Ansichten. Die Antriebseinheit 21.1 umfasst einen ersten Servoantrieb 45 und einen zweiten Servoantrieb 46. Die Drehbewegung, die vom ersten Servoantrieb 45 erzeugt wird, wird mit einem gespannten Zahnriemen 47 auf zwei gleiche Gewindespindeln 41 übertragen. Dazu sind die Ritzel 48, auf denen der Zahnriemen 47 läuft, in den Ecken eines gleichschenkligen Dreiecks angeordnet. Die Drehbewegung, die vom zweiten Servoantrieb 46 erzeugt wird, wird dagegen mit einem gespannten Zahnriemen 47 auf zwei gleiche Keilwellen 43 übertragen. Auch beim zweiten Servoantrieb 46 sind die Ritzel 48, auf denen der Zahnriemen 47 läuft, in den Ecken eines gleichschenkligen Dreiecks angeordnet. Beide Servoantriebe 45, 46 sind verschieblich angeordnet und können zur Einstellung der Riemenvorspannung verschoben werden.

Auf jeder der Gewindespindeln 41 läuft jeweils eine Mutter 42.1 eines spielfreien und vorgespannten Kugelgewindetriebs. Diese Mutter ist starr am oberen Ende des jeweiligen Führungsrohrs 39 angebracht, welches wiederum starr mit dem Basiselement einer der Einzentriervorrichtungen verbunden ist. Die Gewindespindel 41 erstreckt sich somit teilweise in das Führungsrohr 39 hinein. Durch eine Drehung der axial ortsfest angeordneten Gewindespindel 41 verändert sich die Lage der drehfest angeordneten Mutter 42.1 entlang der Vertikalen. Die Mutter 42.1 nimmt entsprechend das Führungsrohr 39 und dadurch das Basisglied 37 der betreffenden Einzentriervorrichtung mit. Damit wirkt das Führungsrohr 39 als Zugstange für die vertikale Verstellung der Position der Einzentriervorrichtung. Durch den Zahnriemenantrieb erfolgt die Verstellung der beiden Einzentriervorrichtungen synchron mittels des ersten Servoantriebes 45.

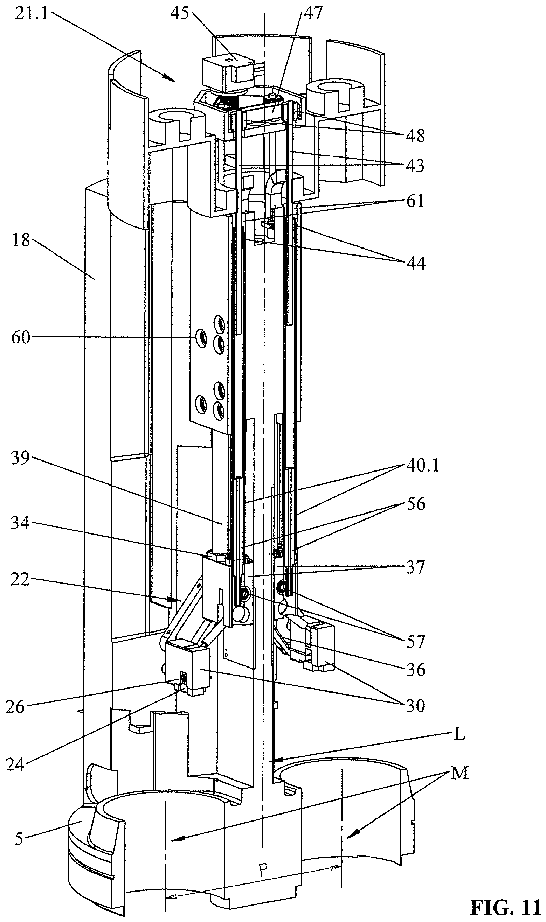

Die radiale Positionierung der beiden Sondenhalter 30 erfolgt analog synchron mittels des Servoantriebes 46. Dies ist zusätzlich in der Figur 11 illustriert. Jede der Keilwellen 43 wirkt mit einer spielfreien, vorgespannten Keilnabe 44 eines Kugelkeilwellentriebs zusammen. Diese Keilnabe 44 ist axial fest, aber drehbar im oberen Ende des Führungsrohres 40.1 gehalten. Sie ist starr mit dem oberen Ende einer Antriebswelle 56 verbunden, welche drehbar im Führungsrohr 40.1 geführt ist (siehe Figur 11). An ihrem unteren Ende ist die Antriebswelle 56 mit einer Schnecke versehen, die ein Abtriebsrad 57 antreibt. Das Abtriebsrad 57 sitzt auf einer der Gelenkachsen der Parallelogrammführung und ist starr mit einer der Schwingen 23.1 des Doppelschwingentriebs 22 verbunden. Durch eine Drehung der Antriebswelle 56 wird so eine Schwenkbewegung der Schwingen 23.1 bewirkt. Das Einschwenken der Sondenhalter 30 der beiden Einzentriervorrichtungen erfolgt somit synchron mittels des zweiten Servoantriebes 46.

Auf diese Weise lässt sich die Einzentriersonde 26 jeder der beiden Einzentriervorrichtungen mit Hilfe der beiden Servoantriebe 45, 46 so positionieren, dass der Abstand der Stirnfläche 27 der Einzentriersonde 26 zur Werkstückverzahnung 10 ca. 0,5 bis 1 mm beträgt. Der Bediener kann dazu an der Bedientafel 19 die jeweilige radiale und vertikale Position für die Sonden 26 eingeben. Das automatische Anfahren an die Verzahnung 10 erfolgt dann mittels der zwei Servoantriebe 45, 46 und der vorhandenen CNC-Steuerung 16. Beide Sonden 26 sind je nach Bedarf einschaltbar.

Alternativ ist es möglich, je einen separaten Servoantrieb für jede Gewindespindel und für jede Keilwelle vorzusehen, so dass jede Einzentriersonde separat verstellt werden kann. Dafür sind vier Servomotoren mit Regelungen erforderlich, mit entsprechend höheren Kosten.

Die jeweils doppelt eingesetzten Kugelgewindetriebe 41, 42.1 und Kugelkeilwellentriebe 43, 44 sind symmetrisch zur Mittenebene I angeordnet und bestehen aus Gleichteilen. Auf diese Weise werden negative thermische Einflüsse vermindert.

Der Antriebsstrang zum Verschwenken des Doppelschwingentriebs 22 ist spielbehaftet. Um dieses Spiel zu vermeiden, ist eine Gasfeder 31 vorgesehen, die diagonal zwischen den Gelenkachsen der Parallelogrammführung angeordnet ist und eine Gegenlast erzeugt. Der Hub der Gasfeder 31 vergrössert sich bei radialer Zustellung des Sondenhalters 30 in Richtung der Werkstückverzahnung. Diese Gasfeder sorgt dadurch dafür, dass die anliegende Schneckenflanke der Antriebswelle 56 immer durch das Gewicht des Sondenhalters 30 und zusätzlich durch diese Gegenlast belastet ist. Dadurch wird ein unerwünschter Flankenwechsel auf der Schnecke, d.h. Spiel in der Zahnflanke, vermieden.

Die ständig wirkende Kraft in der Gasfeder 31 verhindert ausserdem ein störendes Vibrieren des Sondenhalters 30.

Die Antriebseinheit 21.1 ist auf dem Gegenständer 18 an dessen oberem Ende angeordnet. In dieser oberen Anordnung kann die Antriebseinheit 21.1 relativ gross bauen. Durch die obere Anordnung werden Kollisionen mit einem Greifer 13 einer Beschickungseinrichtung, dessen Handlingsraum F sich immer im unteren Bereich eines Werkstücks 8 auf der Parkposition E befindet, vermieden. Der Sondenhalter 30 ist dagegen unmittelbar hinter der Werkstückverzahnung 10 angeordnet. Er befindet sich in einem zentrumsnahen Bereich zwischen Werkstückträgerachse und Werkstückspindelachse, der vor Kollisionen mit dem Greifer 13 geschützt ist. In dieser Messposition G muss der Sondenhalter 30 beim Werkstückwechsel nicht wie bisher üblich zwingend entfernt werden, sondern kann in der gewählten Position G verbleiben. Die jeweilige Sonden-Mittenachse N ist in der Mittenebene I des schwenkbaren Werkstückträgers 5 angeordnet.

In der Fig. 11 sind im oberen, geschützten Teil des Gegenständers 18 horizontale und vertikale Bohrungen 60, 61 erkennbar. Die horizontalen Bohrungen 60 dienen zur Lagerung der Laufrollen 29.1 und 29.2. Sie sind so toleriert, dass beim Einfahren der Führungsrohre 39 bzw. 40.1 eine federnde Vorspannkraft durch die elastische Aufnahme der beiden Laufrollen 29.2 entsteht. Die vertikalen Bohrungen 61 dienen zur Durchführung der Führungsrohre 39, 40.1 durch den Gegenständer. Die zylindrischen Führungsrohre 39 und 40.1 können mittels einfacher Dichtungen vor Schleiföl, Schleifschlamm und Scheibenabrieb geschützt werden.

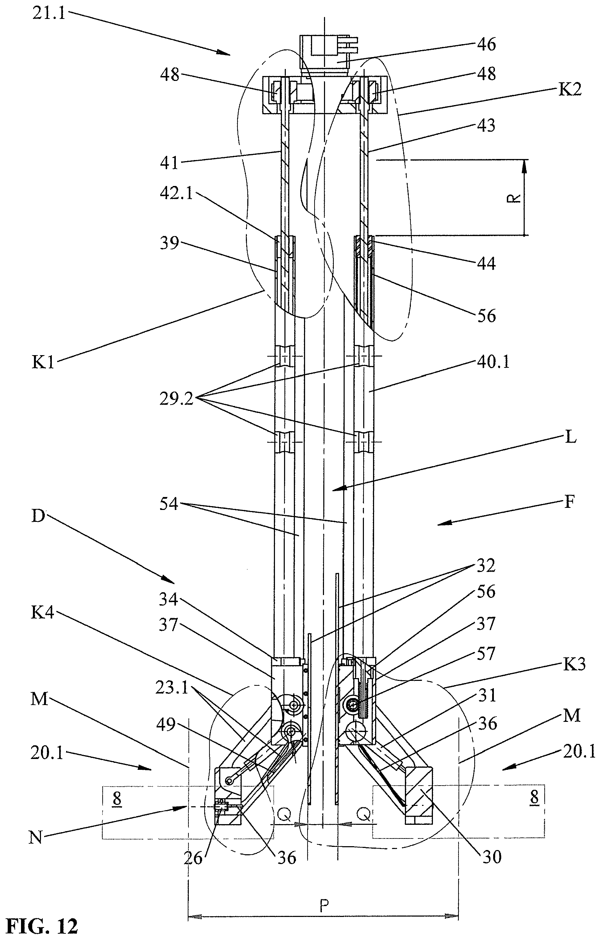

Die Fig. 12 zeigt nochmals Details der Antriebsstränge für die vertikale Verschiebung der Einzentriervorrichtungen und für die Schwenkbewegung der Sondenhalter. Dazu sind in der Fig. 12 vier Ausbrüche K1 bis K4 mit unterschiedlichen Tiefen dargestellt. Im oberen linken Ausbruch K1 ist die Spindel 41 des Kugelgewindetriebes für die linke Einzentriervorrichtung mit der zugehörigen Mutter 42.1 und dem zugehörigen Führungsrohr 39 erkennbar. Der danebenliegende rechte Ausbruch K2 zeigt die Kugelkeilwelle 43 für die rechte Einzentriervorrichtung mit Keilnabe 44 und dem Führungsrohr 40.1, in dem die drehbare Antriebswelle 56 untergebracht ist. Im unteren rechten Ausbruch K3 ist diese Antriebswelle 56 mit Schnecke und Abtriebsrad 57 dargestellt. Der linke untere Ausbruch K4 zeigt die in der Mittenebene I angeordnete Sonde 26 mit ihrem Elektrokabel 36 und ihrer Sondenlängsachse N, die schwenkbare Gasfeder 31 und die Zuleitung 49 für die Druckluft.

Die vorstehend erläuterte Einzentriervorrichtung der ersten Ausführungsform ist im verschmutzten Arbeitsraum D relativ unempfindlich gegenüber Kühlmittel, Schleifschlamm und Schleifscheibenabrieb, da die Führungsrohre 39 und 40.1 im oberen, geschützten Teil des Gegenständers 18 untergebracht sind und der im Arbeitsraum D befindliche Schlitten 37 durch Abstreifer 51, Sperrluft 49 und eine antimagnetische Platte 32 ausreichend geschützt werden kann. Die Drehgelenke 28 - ebenfalls im Arbeitsraum D - lassen sich durch Dichtungen unkritisch abdichten. Dagegen ist die gesamte Antriebseinheit 21.1 im oberen geschützten Teil des Gegenständers 18 ausserhalb des Arbeitsraumes D angeordnet und sicher vor Verschmutzung geschützt.

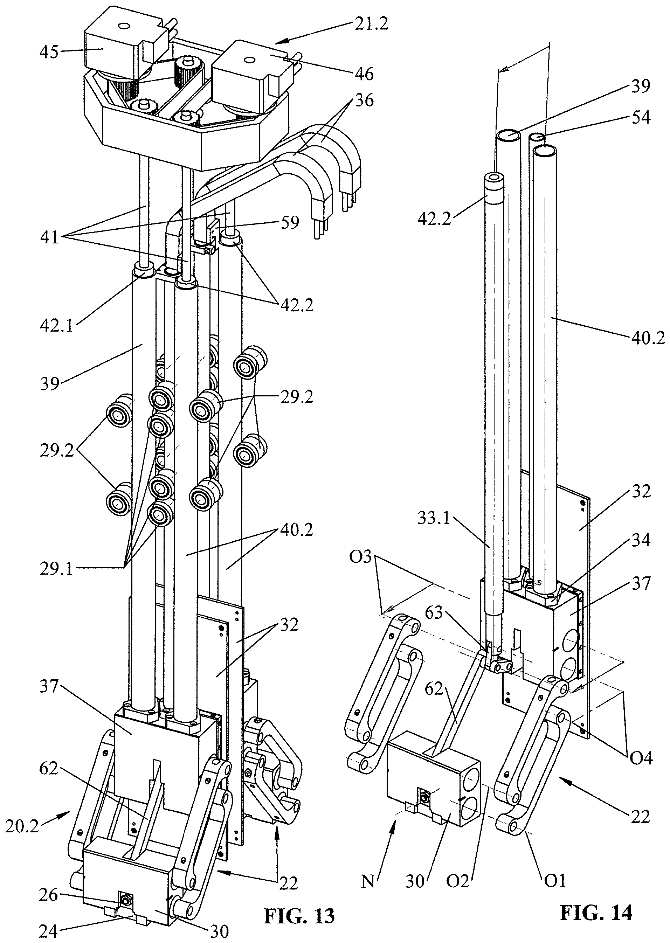

In den Figuren 13 und 14 ist eine zweite Ausführungsform einer Zahnradbearbeitungsmaschine mit einer Einzentriervorrichtung 20.2 illustriert. Gleich oder ähnlich wirkende Teile sind mit denselben Bezugszeichen wie bei der ersten Ausführungsform versehen und werden nicht erneut beschrieben. Diese Ausführungsform unterscheidet sich von der ersten Ausführungsform vor allem durch die Art und Weise, in der der Sondenhalter 30 gegenüber dem Basisglied 37 verschwenkt wird. Zu diesem Zweck ist anstelle des spielbehafteten Winkeltriebes aus Antriebswelle 56 und Abtriebsrad 57 eine spielfreie Hebelkonstruktion eingebaut. Die Kugelkeilwelle 43 mit Keilnabe 44, die Antriebswelle 56 und das Abtriebsrad 57 der ersten Ausführungsform sind durch einen weiteren Kugelgewindetrieb aus Gewindespindel 41 und Mutter 42.2, eine Zugstange 33.1, ein Zwischenstück (Ausgleichsglied) 63 und einen kniehebelartigen Schwenkhebel 62 ersetzt. Die beiden Schwenkachsen dieses Schwenkhebels 62 sind jeweils konzentrisch zur Gelenkachse O2 im Sondenhalter 30 und zur Gelenkachse O3 im Basisglied 37 angeordnet. Das Ausgleichsglied ist schwenkbar zwischen der Zugstange 33.1 und einem zwischen den Gelenkachsen O2 und O3 angeordneten Angriffspunkt am Schwenkhebel 62 angeordnet. Die Explosionsdarstellung in Fig. 14 zeigt die Anordnung dieser Teile im Sondenhalter 30 und im Basisglied 37.

Der rotierende Servoantrieb 46 und der Kugelgewindetrieb mit Gewindespindel 41 sind über die spielfreie Mutter 42.2 mit der Zugstange 33.1 fest verbunden. Diese führt eine vertikale Hubbewegung aus. Diese Zugstange 33.1 ist in ein zylindrisches Führungsrohr 40.2 eingebaut und spielfrei über das Zwischenstück 63 mit einem Angriffspunkt des Schwenkhebels 62 verbunden. Bei einem Hub der Zugstange 33.1 führt der angekoppelte Sondenhalter 30 eine entsprechende Schwenkbewegung aus. Wird die Zugstange 33.1 nach oben verschoben, dann wird der Sondenhalter 30 in Richtung der Drehachse M der Werkstückspindel eingeschwenkt. Wird die Zugstange 33.1 nach unten verschoben, dann wird der Sondenhalter 30 weg von der Drehachse M der Werkstückspindel geschwenkt. Schwenkhebel 62 und Schwinge 23.1 sind gleich lang. Der Schwenkhebel 62 ist weiterhin mittig in dieser Einzentriervorrichtung 20.2 angeordnet. Die veränderte Antriebseinheit 21.2 ist analog zur Antriebseinheit 21.1 aufgebaut. Die radiale und vertikale Position der Sonde 26 wird hierbei auch an der Bedientafel 24 eingegeben und kann automatisch angefahren werden.

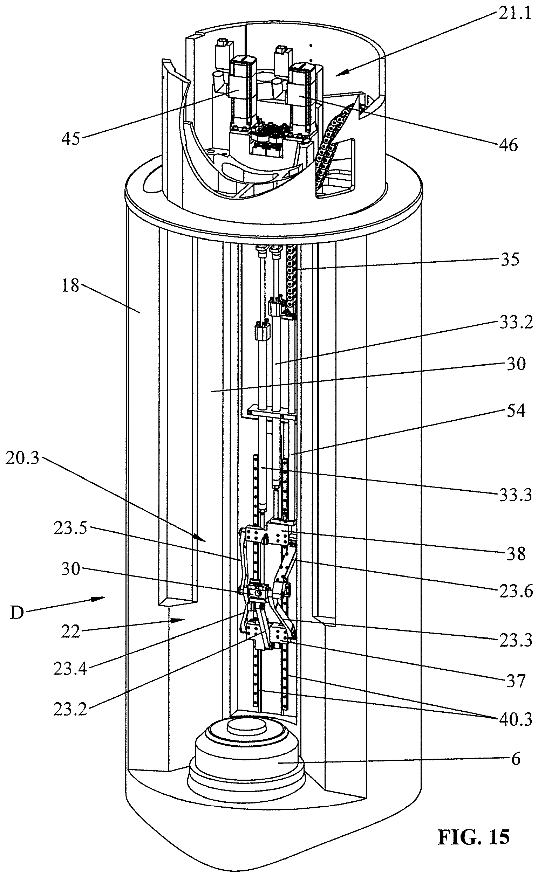

Die Fig. 15 zeigt eine dritte Ausführungsform einer Zahnradbearbeitungsmaschine mit Einzentriervorrichtung 20.3. Wiederum sind ähnlich wirkende Teile mit denselben Bezugszeichen wie bei der ersten Ausführungsform bezeichnet. Die Maschine der Fig. 15 weist neben der Parallelogrammführung mit Basisglied 37 und Sondenhalter 30 einen Hilfsschlitten 38 auf, der über zwei Hilfsschwingen 23.5, 23.6 mit dem Sondenhalter 30 verbunden ist. Das Basisglied 37 lässt sich über eine zylindrische Zugstange 33.3 durch den ersten Servoantrieb 45 verschieben Der Hilfsschlitten 38 lässt sich über eine zylindrische Zugstange 33.2 durch den zweiten Servoantrieb 46 verschieben. Die zur Einhaltung der vertikalen Lage des Sondenhalters 30 und seiner radialen Zustellung vorgesehene Parallelogrammführung weist hier nur drei Schwingen auf, nämlich eine mittige Schwinge 23.2 und beidseitig jeweils eine Schwinge 23.3 und 23.4. Die Hilfsschwingen 23.5 und 23.6 sind beidseitig des Sondenhalters 30 angeordnet. Alle Schwingen 23.2 bis 23.6 sind gleich lang. Die vertikale Führung des Basisglieds 37 und des Hilfsschlittens 38 erfolgt über zwei separate spielfreie Führungen auf Führungsschienen 40.3, die sich im Arbeitsraum D befinden und deshalb abgedichtet sind.

Die radiale und vertikale Position der Sonde 26 wird hierbei ebenfalls an der Bedientafel 24 eingegeben. Zuerst wird mit einem gegensinnigen Verschieben des Basisglieds 37 und des Hilfsschlittens 38 der radiale Zustellhub W eingestellt, und danach werden das Basisglied 37 und der Hilfsschlitten 38 synchron auf die vertikale Position verschoben. Diese Ausführungsform 20.3 bietet insbesondere dann Vorteile, wenn im oberen Teil des Gegenständers 18 die zylindrischen Linearführungen der ersten Ausführungsform aus Platzgründen nicht untergebracht werden können.

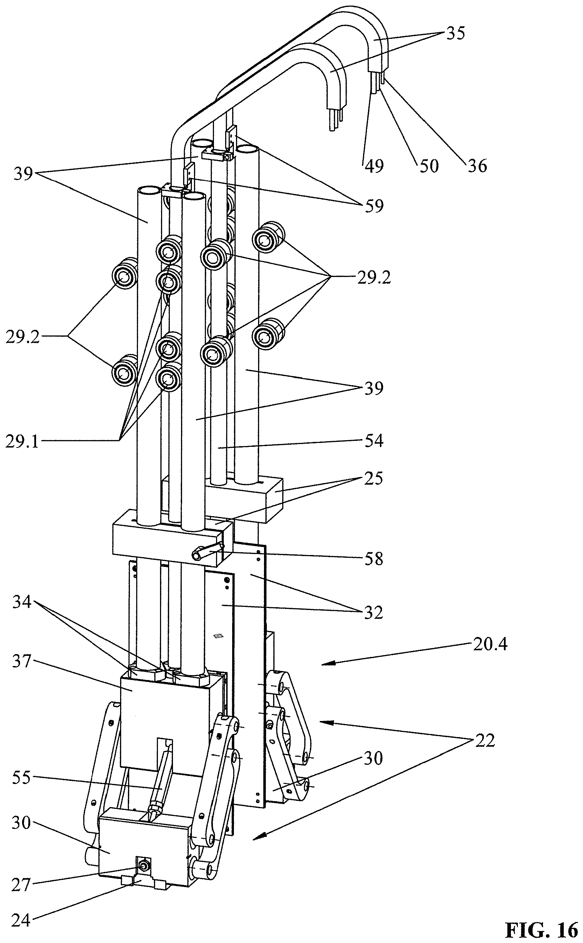

Die Fig. 16 illustriert eine vierte Ausführungsform, die als Abwandlung der ersten Ausführungsform angesehen werden kann aber nicht unter die vorliegenden Ansprüche fällt. Wiederum sind ähnlich wirkende Teile mit denselben Bezugszeichen wie bei der ersten Ausführungsform bezeichnet. Bei dieser Ausführungsform erfolgt die Verstellung der Einzentriervorrichtung 20.4 rein manuell. Das Basisglied 37 wird zur axialen Einstellung der Höhe von Hand verschoben. Zur Fixierung werden die Führungsrohre 39 an einer Klemmleiste 25 über einen Klemmhebel 58 fixiert. Die radiale Verstellung erfolgt separat über eine Verstellspindel 55 mit Kontermutter, die diagonal zur Parallelogrammführung mittig angeordnet ist, analog zur Gasfeder 31 der ersten Ausführungsform.

Diese manuell verstellbare Vorrichtung 20.4 ist dann mit Vorteil einsetzbar, wenn keine automatisierte Grossserienfertigung erforderlich und die Zeit für das manuelle Bedienen unkritisch ist. Die Kosten können hierfür wesentlich durch Entfall der kompletten Antriebseinheit 21.1 verringert werden.

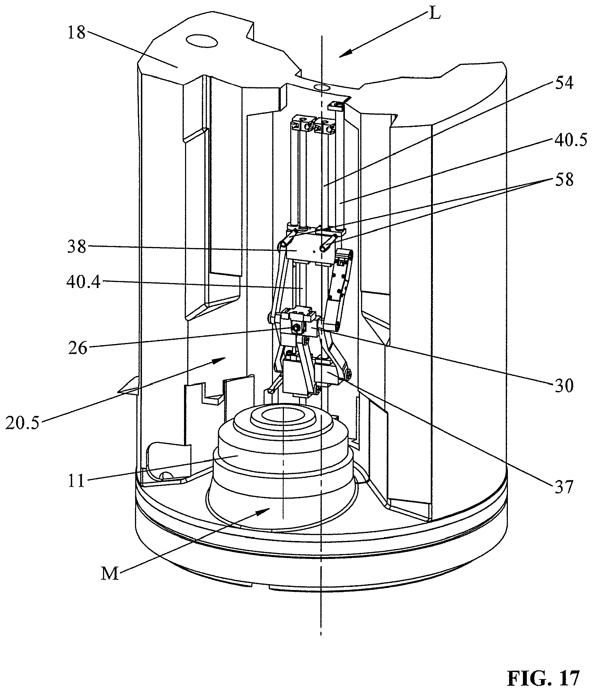

In der Fig. 17 ist eine fünfte Ausführungsform illustriert, die als Abwandlung der dritten Ausführungsform angesehen werden kann aber auch nicht unter die vorliegenden Ansprüche fällt. Wiederum sind ähnlich wirkende Teile mit denselben Bezugszeichen wie bei der ersten Ausführungsform bezeichnet. Auch bei dieser Ausführungsform erfolgt die Verstellung der Einzentriervorrichtung 20.5 rein manuell. Die Verstellung des Basisglieds 37 und des Hilfsschlittens 38 erfolgt hier von Hand. Zur Fixierung beider Positionen werden zwei Klemmhebel 58 verwendet. Die vertikale Führung beider Schlitten 37 und 38 erfolgt hier durch zylindrische Linearführungen mit Führungsstangen 40.4 und 40.5.

Während bei den vorstehend beschriebenen Ausführungsformen jeweils zwei Werkstückspindeln mit zugeordneten Einzentriervorrichtungen vorgesehen sind, kann eine dieser Werkstückspindeln auch entfallen.

Das Einzentrieren erfolgt bei allen vorstehend genannten Ausführungsformen vorzugsweise in der Parkposition E und/oder beim Schwenken des Werkstückträgers 5, kann aber auch in der Arbeitsposition C erfolgen.

Wenn Servoantriebe für die Einstellung der vertikalen Position des Basisglieds und für die Einstellung der Schwenkposition des Sondenhalters vorhanden sind, kann die Einzentriervorrichtung beim Bearbeiten von Blockzahnrädern automatisch an mehrere Verzahnungen des Blockzahnrads herangefahren werden, um diese jeweils einzuzentrieren.

Die Einzentriervorrichtungen der vorstehend erläuterten Ausführungsformen sind allesamt sehr steif, sowohl in Schwenkrichtung als auch radial und vertikal. Sie können sehr gut die hohen Kräfte bei der Beschleunigung des schwenkbaren Werkstückträgers 5 aufnehmen und besitzen sehr gute dynamische Eigenschaften. In der ersten Ausführungsform sind die dynamischen Eigenschaften zusätzlich noch durch den Einbau einer dämpfenden Gasfeder 31 und durch das feste Ansaugen des Basisglieds 37 an den Gegenständer 18 in jeder beliebigen vertikalen Position verbessert; zusätzlich werden dadurch störende Vibrationen vermieden.

Durch die Parallelogramm-Kinematik positionieren die vorstehend erläuterten Einzentriervorrichtungen allesamt sehr wiederholgenau. Durch eine thermosymmetrische Anordnung der Schwingen der Parallelogrammführung und ihre Ausführung als Gleichteile wird eine hohe thermische Stabilität gewährleistet. Eine Schiefstellung durch thermisches Wachsen ist damit praktisch ausgeschlossen.

Die verschieblichen Teile der vorstehend erläuterten Einzentriervorrichtungen sind relativ leicht und können mit relativ klein bauenden Servomotoren oder mit Handkraft positioniert werden. Der Sondenhalter 30 kann sehr klein und flach dimensioniert werden und benötigt daher wenig Platz im kritischen Bauraum hinter der Werkstückverzahnung 10.

Die vorstehend erläuterten Einzentriervorrichtungen können neben den Einzentriersonden 26 weitere Sensoren (z.B. Laser, Ultraschall, Temperatur) tragen.

Die vorstehend erläuterten Einzentriervorrichtungen sind insgesamt modular aufgebaut und daher sehr wartungsfreundlich.

BEZUGSZEICHENLISTE

| | |
|---|---|
| 1 | Zahnradschleifmaschine |
| 2 | Schleifschlitten |
| 3 | Schleifkopf |
| 4 | Schleifschnecke |
| 5 | Werkstückträger |
| 6 | Werkstückspindel |
| 7 | Werkstückspindel |
| 8 | Zahnrad |
| 9 | Z-Schlitten |
| 10 | Werkstückverzahnung |
| 11 | Werkstückaufspannung |
| 12 | Abrichteinheit |
| 13 | Werkstückgreifer |
| 14 | Maschinenbett |
| 15 | Werkzeugträger |
| 16 | CNC- Steuerung |
| 17 | Reitstock |
| 18 | Gegenständer |
| 19 | Bedientafel |
| 20.1...20.6 | Einzentriervorrichtung |
| 21.1, 21.2 | Antriebseinheit |
| 22 | Doppelschwingentrieb |
| 23.1...23.6 | Schwinge |
| 24 | Adapterteil |
| 25 | Klemmleiste |
| 26 | Sonde zum Einzentrieren |
| 27 | Stirnfläche der Sonde |
| 28 | Drehgelenk |
| 29.1,29.2 | Laufrolle |
| 30 | Sondenhalter |
| 31 | Gasfeder |
| 32 | Platte, antimagnetisch |
| 33.1...33.3 | Zugstange |
| 34 | Klemmstück |
| 35 | Energiekette |
| 36 | Elektrokabel zur Sonde |
| 37 | Basisglied (Schlitten) |
| 38 | Hilfsschlitten |
| 39 | Führungsrohr |
| 40.1, 40.2 | Führungsrohr |
| 40.3 | Führungsschiene |
| 40.4, 40.5 | Führungsstange |
| 41 | Spindel eines Kugelgewindetriebes |
| 42.1, 42.2 | Mutter des Kugelgewindetriebes |
| 43 | Kugelkeilwelle |
| 44 | Kugelkeilnabe |
| 45 | Servoantrieb für vertikale Verstellung |
| 46 | Servoantrieb für radiales Schwenken |
| 47 | Zahnriemen |
| 48 | Ritzel für Zahnriementrieb |
| 49 | Zuleitung für Druckluft |
| 50 | Zuleitung für Saug- oder Druckluft |
| 51 | Abstreifer |
| 52 | Aussparung zum Ansaugen und Abdrücken |
| 53 | Aussparungen zum Abdichten |
| 54 | Schutzrohr |
| 55 | Verstellspindel mit Kontermutter |
| 56 | Antriebswelle mit Ritzel |
| 57 | Abtriebsrad |
| 58 | Klemmhebel |
| 59 | Klemmstück |
| 60 | Bohrung, horizontal |
| 61 | Bohrung, vertikal |
| 62 | Schwenkhebel |
| 63 | Zwischenstück |
| 64 | Zentrierspitze |
| A | Detailansicht |
| B | Detailansicht |
| C | Arbeitsposition |
| D | Arbeitsraum |
| E | Belade- oder Parkposition |
| F | Handlingsraum |
| G | Messposition |
| H | Mittenebene der Maschine |
| I | erste Mittenebene des Werkstückträgers |
| J | zweite Mittenebene des Werkstückträgers |
| K1...K4 | Ausbruch |
| L | Werkstückträgerachse |
| M | Werkstückspindelachse |
| N | Mittenachse der Einzentriersonde |
| O1...O4 | Gelenkachse |
| P | Mittenabstand zwischen beiden Werkstückspindeln |
| Q | Minimaler Abstand zwischen Vertikalschlitten und Mittenebene J |
| R | Verschiebehub |
| S | Werkstückdurchmesser, min |
| T | Werkstückdurchmesser, max |
| U | Länge der Schwinge |
| V | Vertikaler Zusatzhub |
| W | Radialer Zustellhub |
| $\alpha$ | Schwenkwinkel |

**Patentansprüche**

1. Maschine zur Bearbeitung vorverzahnter Werkstücke, aufweisend:

    einen Werkstückträger (5);
    mindestens eine auf dem Werkstückträger (5) angeordnete Werkstückspindel (6; 7) zur Aufspannung eines Werkstücks (8), wobei die Werkstückspindel (6; 7) zu einer Drehung um eine vertikal im Raum verlaufende Werkstückspindelachse (M) antreibbar ist; und
    eine Einzentriervorrichtung (20),
    **dadurch gekennzeichnet,**
    **dass** die Einzentriervorrichtung (20) einen Sondenhalter (30) mit einer berührungslos arbeitenden Einzentriersonde (26) umfasst, wobei der Sondenhalter (30) eine axial und/oder radial veränderliche Lage relativ zur Werkstückspindelachse (M) aufweist,
    **dass** die Maschine mindestens einen Verstellantrieb (45; 46) aufweist, um die Lage des Sondenhalters (30) relativ zur Werkstückspindelachse (M) axial und/oder radial zu verändern, und
    **dass** der Verstellantrieb (45; 46) auf einem Gegenständer (18) des Werkstückträgers (5) oberhalb der Einzentriervorrichtung (20) angeordnet ist.

2. Maschine nach Anspruch 1, wobei die Maschine einen ersten Verstellantrieb (45) und einen zweiten Verstellantrieb (46) aufweist, wobei der erste Verstellantrieb (45) eine Lageveränderung des Sondenhalters (30) zumindest axial zur Werkstückspindelachse (M) bewirkt, und wobei der zweite Verstellantrieb (46) eine Lageveränderung des Sondenhalters (30) zumindest radial zur Werkstückspindelachse (M) bewirkt, und wobei sowohl der erste als auch der zweite Verstellantrieb (45; 46) auf dem Gegenständer (18) angeordnet sind.

3. Maschine nach Anspruch 1 oder 2, aufweisend ein stationäres Maschinenbett (14),

    wobei der Werkstückträger (5) gegenüber dem Maschinenbett (14) zwischen mindestens zwei Stellungen um eine Werkstückträgerachse (L) schwenkbar ist,
    wobei die mindestens eine Werkstückspindel (6; 7) derart auf dem schwenkbaren Werkstückträger (5) angeordnet ist, dass sie zwischen einer Arbeitsposition und einer Beladeposition bewegbar ist,
    wobei die Werkstückspindelachse (M) parallel zur Werkstückträgerachse (L) und in einem Abstand von dieser verläuft,
    und wobei die Einzentriervorrichtung zwischen der Werkstückspindelachse (M) und der Werkstückträgerachse (L) angeordnet ist.

4. Maschine nach Anspruch 3,

    wobei die Maschine zwei parallele Werkstückspindeln (6, 7) umfasst, die beide auf dem beweglichen Werkstückträger (5) angeordnet, zur Aufspannung eines Werkstücks ausgebildet und zu einer Drehung um eine Werkstückspindelachse (M) antreibbar sind,
    wobei jeder Werkstückspindel (6, 7) jeweils eine Einzentriervorrichtung zugeordnet ist,
    wobei jede der Einzentriervorrichtungen einen Sondenhalter (30) mit einer berührungslos arbeitenden Einzentriersonde (26) umfasst,
    wobei jeder Sondenhalter (30) eine axial und/oder radial veränderliche Lage relativ zur Werkstückspindelachse (M) aufweist,
    wobei der mindestens eine Verstellantrieb (45; 46) dazu ausgebildet ist, die Lage jedes Sondenhalters (30) relativ zur Werkstückspindelachse (M) axial und/oder radial zu verändern, und
    wobei die Einzentriervorrichtungen vorzugsweise symmetrisch zueinander aufgebaut und angeordnet sind.

5. Maschine nach Anspruch 4, wobei die Maschine aufweist:

    einen ersten Verstellantrieb (45), der eine simultane Lageveränderung beider Sondenhalter (30) zumindest axial zur Werkstückspindelachse (M) bewirkt, und/oder
    einen zweiten Verstellantrieb (46), der eine simultane Lageveränderung beider Sondenhalter (30) zumindest radial zur Werkstückspindelachse (M) bewirkt.

6. Maschine nach einem der vorhergehenden Ansprüche,

    wobei die Einzentriervorrichtung (20) ein Basisglied (37) umfasst,
    wobei die Maschine eine Linearführung für das Basisglied (37) aufweist, um eine Verschiebung des Basisglieds (37) gegenüber dem Werkstückträger (5) parallel zur Werkstückspindelachse (M) zu ermöglichen, und
    wobei der Sondenhalter (30) derart mit dem Basisglied (37) verbunden ist, dass der Sondenhalter (30) einen veränderlichen radialen Abstand zur Werkstückspindelachse (M) aufweist.

7. Maschine nach Anspruch 6, aufweisend:
    eine mit dem Basisglied (37) verbundene erste Zugstange (39), die sich parallel zur Werkstückspindelachse (M) erstreckt, um das Basisglied (37) gegenüber dem Werkstückträger (5) parallel zur Werkstückspindelachse (M) zu verschieben.

8. Maschine nach Anspruch 7, aufweisend:
beidseitig der ersten Zugstange (39) angeordnete Rollen (29), zwischen denen die erste Zugstange (39) längsgeführt ist, so dass die erste Zugstange (39) und die Rollen (29) gemeinsam mindestens einen Teil der Linearführung für die Einzentriervorrichtung (20) bilden.

9. Maschine nach einem der Ansprüche 6 bis 8,

aufweisend eine auf dem Werkstückträger (5) angeordnete Führungsplatte (32), die eine parallel zur Werkstückspindelachse (M) verlaufende Führungsfläche definiert,
wobei das Basisglied (37) eine komplementäre Gleitfläche aufweist, die verschiebbar auf der Führungsfläche der Führungsplatte (32) gleitet, um eine zusätzliche Gleitführung für das Basisglied (37) zu bilden, und
wobei in der Gleitfläche eine Saugöffnung (52) vorhanden ist, um das Basisglied (37) mittels Unterdruck an der Führungsplatte (32) zu fixieren.

10. Maschine nach einem der Ansprüche 6 bis 9, aufweisend:

einen ersten Verstellantrieb (45); und
eine mit dem ersten Verstellantrieb (45) zusammenwirkende Gewindespindel (41), die sich parallel zur Werkstückspindelachse (M) erstreckt und die derart direkt oder indirekt mit dem Basisglied (37) verbunden ist, dass eine Betätigung des ersten Verstellantriebs (45) eine Verschiebung des Basisglieds (37) parallel zur Werkstückspindelachse (M) bewirkt.

11. Maschine nach Anspruch 10,

aufweisend eine mit dem Basisglied (37) verbundene, rohrförmige erste Zugstange (39), die sich parallel zur Werkstückspindelachse (M) erstreckt,
wobei sich die Gewindespindel (41) in das Innere der rohrförmigen ersten Zugstange (39) hinein erstreckt; und
wobei die Maschine eine Mutter (42) aufweist, die starr mit der ersten Zugstange (39) verbunden ist und die mit der Gewindespindel (41) zusammenwirkt, um durch eine Drehung der Gewindespindel (41) eine Verschiebung der ersten Zugstange (39) parallel zur Werkstückspindelachse (M) zu bewirken.

12. Maschine nach einem der Ansprüche 6 bis 11,

aufweisend eine Antriebswelle (56), die sich parallel zur Werkstückspindelachse (M) erstreckt und gegenüber dem Basisglied (37) drehbar ist, und
ein Getriebe (57), das am Basisglied (37) angeordnet ist, um eine Drehbewegung der Antriebswelle (56) in eine Bewegung umzuwandeln, die eine Veränderung des radialen Abstands des Sondenhalters (30) von der Werkstückspindelachse (M) bewirkt,
wobei die Maschine optional ausserdem aufweist:

einen zweiten Verstellantrieb (46);
eine mit dem zweiten Verstellantrieb (46) zusammenwirkende Keilwelle (43), die sich parallel zur Werkstückspindelachse (M) erstreckt; und
eine mit der Antriebswelle (56) verbundene Keilnabe (44), die längsverschieblich und drehfest mit der Keilwelle (43) in Eingriff steht, um eine Drehbewegung des zweiten Verstellantriebs (46) auf die Antriebswelle (56) zu übertragen.

13. Maschine nach einem der Ansprüche 6 bis 11, aufweisend:

eine zweite Zugstange (33.1), die sich parallel zur Werkstückspindelachse erstreckt und die relativ zum Basisglied (37) axial verschieblich ist;
einen Hebelmechanismus, der die zweite Zugstange (33.1) derart mit der Einzentriervorrichtung verbindet, dass eine axiale Verschiebung der Zugstange (33.1) relativ zum Basisglied (37) eine Veränderung des radialen Abstands des Sondenhalters (30) von der Werkstückspindelachse (M) bewirkt.

14. Maschine nach einem der Ansprüche 6 bis 11, aufweisend:

einen Hilfsschlitten (38), der relativ zum Werkstückträger (5) und relativ zum Basisglied (37) parallel zur Werkstückspindelachse (M) verschiebbar ist;
mindestens einen Hilfsarm (23.5), der mit dem Hilfsschlitten (38) und der Einzentriervorrichtung verbunden ist, so dass eine Verschiebung des Hilfsschlittens (38) relativ zum Basisglied (37) eine Veränderung des radialen Abstands des Sondenhalters (30) von der Werkstückspindelachse (M) bewirkt,
wobei die Maschine optional ausserdem aufweist:

eine mit dem Hilfsschlitten (38) verbundene zweite Zugstange (33.2), die sich parallel zur Werkstückspindelachse (M) erstreckt, um den Hilfsschlitten (38) parallel zur Werkstückspindelachse (M) zu verschieben, und wobei die Maschine vorzugsweise ausserdem aufweist

einen zweiten Verstellantrieb (46); und eine mit dem zweiten Verstellantrieb (46) zusammenwirkende zweite Gewindespindel (41), die sich parallel zur Werkstückspindelachse (M) erstreckt und die derart direkt oder indirekt mit dem Hilfsschlitten (38) verbunden ist, dass eine Betätigung des zweiten Verstellantriebs (38) eine Verschiebung des Hilfsschlittens (38) parallel zur Werkstückspindelachse (M) bewirkt.

15. Maschine nach einem der Ansprüche 6 bis 14, wobei die Einzentriervorrichtung mindestens zwei Schwingen (23) umfasst, die mit dem Sondenhalter (30) und dem Basisglied (37) eine Parallelogrammführung bilden, so dass der Sondenhalter (30) gegenüber dem Basisglied (37) entlang einer Bogenbahn verschwenkbar ist, ohne seine Orientierung zu verändern.

## Claims

1. A machine for machining workpieces with pre-machined teeth, comprising:

   a workpiece support (5);
   at least one workpiece spindle (6; 7) for the chucking of a workpiece (8), the workpiece spindle (6; 7) being arranged on the workpiece support (5) and being adapted to be driven in rotation about a workpiece spindle axis (M);
   a meshing device (20),
   **characterized in that**
   the meshing device (20) comprises a probe holder (30) with a meshing probe (26) for contactless operation, the probe holder (30) having an axially and/or radially variable position relative to the workpiece spindle axis (M),
   **in that** the machine comprises at least one adjustment drive (45; 46) for changing the position of the probe holder (30) axially and/or radially relative to the workpiece spindle axis (M), and
   **in that** the adjustment drive (45; 46) is arranged on a counter stand (18) of the workpiece support (5) above the meshing device (20).

2. The machine according to claim 1, wherein the machine comprises a first adjustment drive (45) and a second adjustment drive (46), wherein the first adjustment drive (45) effects a change in position of the probe holder (30) at least axially with respect to the workpiece spindle axis (M), and wherein the second adjustment drive (46) effects a change in position of the probe holder (30) at least radially with respect to the workpiece spindle axis (M), and wherein both the first and the second adjustment drives (45; 46) are arranged on the counter stand (18).

3. The machine according to claim 1 or 2, comprising a static machine bed (14),

   wherein the workpiece support (5) is pivotable relative to the machine bed (14) about a workpiece support axis (L) between at least two positions,
   wherein the at least one workpiece spindle (6; 7) is arranged on the pivotable workpiece support (5) so as to be movable between a working position and a loading position,
   wherein the workpiece spindle axis (M) runs parallel to and with a spacing from the workpiece support axis (L),
   and wherein the meshing device is arranged between the workpiece spindle axis (M) and the workpiece support axis (L).

4. The machine according to claim 3,

   wherein the machine comprises two parallel workpiece spindles (6, 7), which are both arranged on the movable workpiece support (5) and which are configured for the chucking a workpiece and which are adapted to be driven in rotation about a workpiece spindle axis (M),
   wherein a meshing device is assigned to each workpiece spindle (6, 7),
   wherein each of the meshing devices comprises a probe holder (30) with a meshing probe (26) for contactless operation,
   wherein each probe holder (30) has an axially and/or radially variable position relative to the workpiece spindle axis (M),
   wherein the at least one adjustment drive (45; 46) is configured to vary the position of each probe holder (30) axially and/or radially relative to the workpiece spindle axis (M), and
   wherein the meshing devices are preferably constructed and arranged symmetrically with respect to one another.

5. The machine according to claim 4, wherein the machine comprises:

   a first adjustment drive (45) which effects a simultaneous change in position of both probe holders (30) at least axially relative to the workpiece spindle axis (M), and/or

a second adjustment drive (46) which effects a simultaneous change in position of both probe holders (30) at least radially relative to the workpiece spindle axis (M).

6. The machine according to any of the preceding claims,

wherein the meshing device (20) comprises a base element (37),
wherein the machine comprises a linear guide for the base element (37) so als to permit a displacement of the base element (37) relative to the workpiece support (5) parallel to the workpiece spindle axis (M), and
wherein the probe holder (30) is connected to the base element (37) such that the probe holder (30) has a variable radial distance from the workpiece spindle axis (M).

7. The machine according to claim 6, comprising:
a first pull rod (39) connected to the base element (37) and extending parallel to the workpiece spindle axis (M) for displacing the base element (37) relative to the workpiece support (5) parallel to the workpiece spindle axis (M).

8. The machine according to claim 7, comprising:
rollers (29) which are arranged to both sides of the first pull rod (39) and between which the first pull rod (39) is longitudinally guided such that the first pull rod (39) and the rollers (29) together form at least part of the linear guide for the meshing device (20).

9. The machine according to any one of claims 6 to 8,

comprising a guide plate (32) arranged on the workpiece support (5) and defining a guide surface extending parallel to the workpiece spindle axis (M),
wherein the base element (37) has a complementary slide surface which slides in displaceable fashion on the guide surface of the guide plate (32) in order to form an additional sliding guide for the base element (37), and
wherein, in the slide surface, there is a suction opening (52) for fixing the base element (37) to the guide plate (32) by means of negative pressure.

10. The machine according to any one of claims 6 to 9, comprising:

a first adjustment drive (45); and
a threaded spindle (41) which interacts with the first adjustment drive (45) and which extends parallel to the workpiece spindle axis (M) and which is connected directly or indirectly to the base element (37) such that actuation of the first adjustment drive (45) effects a displacement of the base element (37) parallel to the workpiece spindle axis (M).

11. The machine according to claim 10,

comprising a tubular first pull rod (39) which is connected to the base element (37) and which extends parallel to the workpiece spindle axis (M),
wherein the threaded spindle (41) extends into the interior of the tubular first pull rod (39); and
wherein the machine comprises a nut (42) which is rigidly connected to the first pull rod (39) and which interacts with the threaded spindle (41) in order to effect, as a result of a rotation of the threaded spindle (41), a displacement of the first pull rod (39) parallel to the workpiece spindle axis (M).

12. The machine according to any one of claims 6 to 11,

comprising a drive shaft (56) which extends parallel to the workpiece spindle axis (M) and which is rotatable relative to the base element (37), and a gearing (57) which is arranged on the base element (37) in order to convert a rotational movement of the drive shaft (56) into a movement which effects a change of the radial distance of the probe holder (30) from the workpiece spindle axis (M),

the machine optionally further comprising:

a second adjustment drive (46);
a spline shaft (43) which interacts with the second adjustment drive (46) and which extends parallel to the workpiece spindle axis (M); and
a spline hub (44) which is connected to the drive shaft (56) and which is in engagement in longitudinally displaceable and rotationally conjoint fashion with the spline shaft (43) in order to transmit a rotational movement of the second adjustment drive (46) to the drive shaft (56).

13. The machine according to any one of claims 6 to 11, comprising:

a second pull rod (33.1) which extends parallel to the workpiece spindle axis and which is axially displaceable relative to the base element (37);
a lever mechanism which connects the second pull rod (33.1) to the meshing device such that axial displacement of the pull rod (33.1) relative to the base element (37) effects a change in the radial distance of the probe holder (30) from the workpiece spindle axis (M).

**14.** The machine according to any one of claims 6 to 11, comprising:

> an auxiliary slide (38) which is displaceable relative to the workpiece support (5) and relative to the base element (37) parallel to the workpiece spindle axis (M);
> at least one auxiliary arm (23.5) which is connected to the auxiliary slide (38) and the meshing device such that adisplacement of the auxiliary slide (38) relative to the base element (37) effects a change in the radial distance of the probe holder (30) from the workpiece spindle axis (M),

the machine optionally further comprising:

> a second pull rod (33.2) which connected to the auxiliary slide (38) and which extends parallel to the workpiece spindle axis (M) in order to displace the auxiliary slide (38) parallel to the workpiece spindle axis (M), and
> wherein the machine preferably further comprises
> a second actuator (46); and
> a second threaded spindle (41) which interacts with the second adjustment drive (46) and which extends parallel to the workpiece spindle axis (M) and is which connected directly or indirectly to the auxiliary slide (38) such that an actuation of the second adjustment drive (38) effects a displacement of the auxiliary slide (38) parallel to the workpiece spindle axis (M).

**15.** The machine according to any one of claims 6 to 14, wherein the meshing device comprises at least two rockers (23) which, together with the probe holder (30) and the base element (37), form a parallelogram guide such that the probe holder (30) is pivotable relative to the base element (37) along a curved path without changing its orientation.

**Revendications**

**1.** Machine pour l'usinage de pièces pré-dentées, comprenant

> un porte-pièce (5);
> au moins une broche porte-pièce (6; 7) disposée sur le porte-pièce (5) pour le serrage d'une pièce (8), la broche porte-pièce (6; 7) pouvant être entraînée en
> rotation autour d'un axe de broche porte-pièce (M) s'étendant verticalement dans l'espace; et
> un dispositif de centrage (20),
> **caractérisé en ce que**
> le dispositif de centrage (20) comprend un support de sonde (30) avec une sonde de centrage (26) fonctionnant sans contact, le support de sonde (30) ayant une position axialement et/ou radialement variable par rapport à l'axe axe de broche porte-pièce (M),
**en ce que** la machine présente au moins un entraînement de réglage (45; 46) pour modifier axialement et/ou radialement la position du support de sonde (30) par rapport à l'axe de broche porte-pièce (M), et
**en ce que** l'entraînement de réglage (45; 46) est disposé sur un contre-support (18) du porte-pièce (5) au-dessus du dispositif de centrage (20).

**2.** Machine selon la revendication 1, la machine présentant un premier entraînement de réglage (45) et un deuxième entraînement de réglage (46), le premier entraînement de réglage (45) provoquant un changement de position du support de sonde (30) au moins axialement par rapport à l'axe de broche porte-pièce (M), et le deuxième entraînement de réglage (46) provoquant un changement de position du support de sonde (30) au moins radialement par rapport à l'axe de broche porte-pièce (M), et tant le premier que le deuxième entraînement de réglage (45; 46) étant disposés sur contre-support (18).

**3.** Machine selon la revendication 1 ou 2, présentant un banc de machine stationnaire (14),

> le porte-pièce (5) étant pivotable par rapport au banc de machine (14) entre au moins deux positions autour d'un axe de porte-pièce (L),
> l'au moins une broche porte-pièce (6; 7) étant disposée sur le porte-pièce (5) pivotant de telle sorte qu'elle peut être déplacée entre une position de travail et une position de chargement,
> l'axe de broche porte-pièce (M) étant parallèle à l'axe du porte-pièce (L) et à une certaine distance de celui-ci,
> et dans lequel le dispositif de centrage est disposé entre l'axe de broche porte-pièce (M) et l'axe du porte-pièce (L).

**4.** Machine selon la revendication 3,

> la machine comprenant deux broches porte-pièce parallèles (6, 7), qui sont toutes deux disposées sur le porte-pièce mobile (5), qui sont conçues pour le serrage d'une pièce à usiner et qui peuvent être entraînées en rotation autour d'un axe de broche porte-pièce (M),
> un dispositif de centrage étant associé à chaque broche porte-pièce (6, 7),
> chacun des dispositifs de centrage comprenant un support de sonde (30) avec une sonde de centrage (26) fonctionnant sans contact,

chaque support de sonde (30) présentant une position axialement et/ou radialement variable par rapport à l'axe de broche porte-pièce (M), l'au moins un entraînement de réglage (45; 46) étant conçu pour modifier axialement et/ou radialement la position de chaque support de sonde (30) par rapport à l'axe de broche porte-pièce (M), et

les dispositifs de centrage étant de préférence construits et disposés de manière symétrique les uns par rapport aux autres.

5. Machine selon la revendication 4, dans laquelle la machine comprend:

un premier entraînement de réglage (45) qui provoque un changement de position simultané des deux supports de sonde (30) au moins axialement par rapport à l'axe de broche porte-pièce (M), et/ou

un deuxième entraînement de réglage (46) qui provoque un changement de position simultané des deux supports de sonde (30) au moins radialement par rapport à l'axe de broche porte-pièce (M).

6. Machine selon l'une des revendications précédentes,

le dispositif de centrage (20) comprenant un élément de base (37),

la machine comprenant un guide linéaire pour l'élément de base (37) afin de permettre un déplacement de l'élément de base (37) par rapport au porte-pièce (5) parallèlement à l'axe de broche porte-pièce (M), et

le support de sonde (30) étant relié à l'élément de base (37) de telle sorte que le support de sonde (30) présente une distance radiale variable par rapport à l'axe de broche porte-pièce (M).

7. Machine selon la revendication 6, comprenant:
une première barre de traction (39) reliée à l'élément de base (37), qui s'étend parallèlement à l'axe de broche porte-pièce (M), afin de déplacer l'élément de base (37) par rapport au porte-pièce (5) parallèlement à l'axe de broche porte-pièce (M).

8. Machine selon la revendication 7, comprenant:
des roulettes (29) disposés des deux côtés de la première barre de traction (39), entre lesquelles la première barre de traction (39) est guidée longitudinalement, de sorte que la première barre de traction (39) et les roulettes (29) forment ensemble au moins une partie du guide linéaire pour le dispositif de centrage (20).

9. Machine selon l'une quelconque des revendications 6 à 8,

présentant une plaque de guidage (32) disposée sur le porte-pièce (5), qui définit une surface de guidage s'étendant parallèlement à l'axe de broche porte-pièce (M),

l'élément de base (37) ayant une surface de glissement complémentaire qui glisse de manière coulissante sur la surface de guidage de la plaque de guidage (32) pour former un guide de glissement supplémentaire pour l'élément de base (37), et

une ouverture d'aspiration (52) étant présente dans la surface de glissement pour fixer l'élément de base (37) sur la plaque de guidage (32) par pression négative.

10. Machine selon l'une quelconque des revendications 6 à 9, comprenant:

un premier entraînement de réglage (45); et
une broche filetée (41) qui interagit avec le premier entraînement de réglage (45), qui s'étend parallèlement à l'axe de broche porte-pièce (M) et qui est reliée directement ou indirectement à l'élément de base (37) de telle sorte qu'un actionnement du premier entraînement de réglage (45) provoque un déplacement de l'élément de base (37) parallèlement à l'axe de broche porte-pièce (M).

11. Machine selon la revendication 10,

présentant une première barre de traction tubulaire (39) reliée à l'élément de base (37), qui s'étend parallèlement à l'axe de broche porte-pièce (M),

la broche filetée (41) s'étendant à l'intérieur de la première barre de traction tubulaire (39); et

comprenant un écrou (42) qui est relié rigidement à la première barre de traction (39) et qui interagit avec la broche filetée (41) pour provoquer, par une rotation de la broche filetée (41), un déplacement de la première barre de traction (39) parallèlement à l'axe de broche porte-pièce (M).

12. Machine selon l'une quelconque des revendications 6 à 11,

comprenant un arbre d'entraînement (56) qui s'étend parallèlement à l'axe de broche porte-pièce (M) et qui peut tourner par rapport à l'élément de base (37), et

un engrenage (57) disposé sur l'élément de base (37) pour convertir un mouvement de rotation de l'arbre d'entraînement (56) en un mouvement qui provoque une variation de la distance radiale du support de sonde (30) par rapport à l'axe de broche porte-pièce (M),

la machine comprenant en outre, en option un deuxième entraînement de réglage (46) ;

un arbre cannelé (43) qui interagit avec le deuxième entraînement de réglage (46) et qui s'étend parallèlement à l'axe de broche porte-pièce (M); et

un moyeu cannelé (44) relié à l'arbre d'entraînement (56), qui est en prise avec l'arbre cannelé (43) de manière à pouvoir se déplacer longitudinalement et à ne pas tourner, afin de transmettre un mouvement de rotation du deuxième entraînement de réglage (46) à l'arbre d'entraînement (56).

13. Machine selon l'une quelconque des revendications 6 à 11, comprenant:

une deuxième barre de traction (33.1) qui s'étend parallèlement à l'axe de broche porte-pièce et qui peut être déplacée axialement par rapport à l'élément de base (37);

un mécanisme de levier qui relie la deuxième barre de traction (33.1) au dispositif de centrage de telle sorte qu'un déplacement axial de la barre de traction (33.1) par rapport à l'élément de base (37) provoque une modification de la distance radiale du support de sonde (30) par rapport à l'axe de broche porte-pièce (M).

14. Machine selon l'une quelconque des revendications 6 à 11, comprenant:

un chariot auxiliaire (38) qui peut être déplacé par rapport au porte-pièce (5) et par rapport à l'élément de base (37) parallèlement à l'axe de broche porte-pièce (M);

au moins un bras auxiliaire (23.5) qui est relié au chariot auxiliaire (38) et au dispositif de centrage, de sorte qu'un déplacement du chariot auxiliaire (38) par rapport à l'élément de base (37) provoque une modification de la distance radiale du support de sonde (30) par rapport à l'axe de broche porte-pièce (M),

la machine comprenant en outre, en option une deuxième barre de traction (33.2) reliée au chariot auxiliaire (38), qui s'étend parallèlement à l'axe de broche porte-pièce (M) afin de déplacer le chariot auxiliaire (38) parallèlement à l'axe de broche porte-pièce (M), et

la machine comprenant de préférence en outre un deuxième entraînement de réglage (46); et une deuxième broche filetée (41) qui interagit avec le deuxième entraînement de réglage (46), qui s'étend parallèlement à l'axe de broche porte-pièce (M) et qui est reliée directement ou indirectement au chariot auxiliaire (38) de telle sorte qu'un actionnement du deuxième entraînement de réglage (38) provoque un déplacement du chariot auxiliaire (38) parallèlement à l'axe de broche porte-pièce (M).

15. Machine selon l'une quelconque des revendications 6 à 14, dans laquelle le dispositif de centrage comprend au moins deux biellettes (23) formant avec le support de sonde (30) et l'élément de base (37) un guidage en parallélogramme, de sorte que le support de sonde (30) peut pivoter par rapport à l'élément de base (37) le long d'une trajectoire en arc de cercle, sans changer son orientation.

**FIG. 1**
**(Stand der Technik)**

**FIG. 2**

FIG. 3

FIG. 4

FIG. 5

FIG. 6

FIG. 7

FIG. 8

FIG. 9

FIG. 10

FIG. 11

**FIG. 12**

**FIG. 13**

**FIG. 14**

FIG. 15

FIG. 16

FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0035621 A1
- DE 3615365 C1
- US 6577917 B1
- US 7013744 B2
- EP 0524943 B1
- DE 102009059331 A1